(19) Europäisches Patentamt
European Patent Office
Office européen des brevets

(11) **EP 1 421 442 B1**

(12) **FASCICULE DE BREVET EUROPEEN**

(45) Date de publication et mention
de la délivrance du brevet:
**06.05.2009 Bulletin 2009/19**

(51) Int Cl.:
***G03B 37/00*** *(2006.01)* ***H04N 5/262*** *(2006.01)*

(21) Numéro de dépôt: **02790193.3**

(86) Numéro de dépôt international:
**PCT/FR2002/002483**

(22) Date de dépôt: **12.07.2002**

(87) Numéro de publication internationale:
**WO 2003/010599 (06.02.2003 Gazette 2003/06)**

(54) **PROCEDE DE CAPTURE D'UNE IMAGE PANORAMIQUE AU MOYEN D'UN CAPTEUR D'IMAGE DE FORME RECTANGULAIRE**

VERFAHREN ZUR ERFASSUNG EINES PANORAMABILDES UNTER VERWENDUNG EINES RECHTECKIGEN BILDSENSORS

METHOD FOR CAPTURING A PANORAMIC IMAGE USING A RECTANGULAR IMAGE SENSOR

(84) Etats contractants désignés:
**AT BE BG CH CY CZ DE DK EE ES FI FR GB GR IE IT LI LU MC NL PT SE SK TR**

(30) Priorité: **20.07.2001 FR 0109735**

(43) Date de publication de la demande:
**26.05.2004 Bulletin 2004/22**

(73) Titulaire: **6115187 Canada Inc.
Saint-Laurent,
Quebec H4M 2P1 (CA)**

(72) Inventeurs:
• **MOUSTIER, Christophe
F-83640 Saint Zacharie (FR)**
• **BLANC, Benjamin
F-13012 Marseille (FR)**

(74) Mandataire: **Marchand, André
OMNIPAT,
24 Place des Martyrs de la Résistance
13100 Aix-en-Provence (FR)**

(56) Documents cités:
**EP-A- 0 695 085 US-A- 5 563 650
US-A- 5 686 957**

EP 1 421 442 B1

**Description**

La présente invention concerne l'obtention d'images panoramiques numériques et l'affichage d'images panoramiques sur des écrans d'ordinateurs.

La présente invention concerne notamment un procédé de capture d'une image panoramique numérique, comprenant une étape de projection d'un panorama sur un capteur d'image au moyen d'un objectif fish-eye ayant un angle de champ constant relativement à son axe optique, le capteur d'image étant de forme rectangulaire.

La présente invention concerne également un procédé d'affichage sur un écran d'une image panoramique initiale capturée conformément au procédé mentionné ci-dessus.

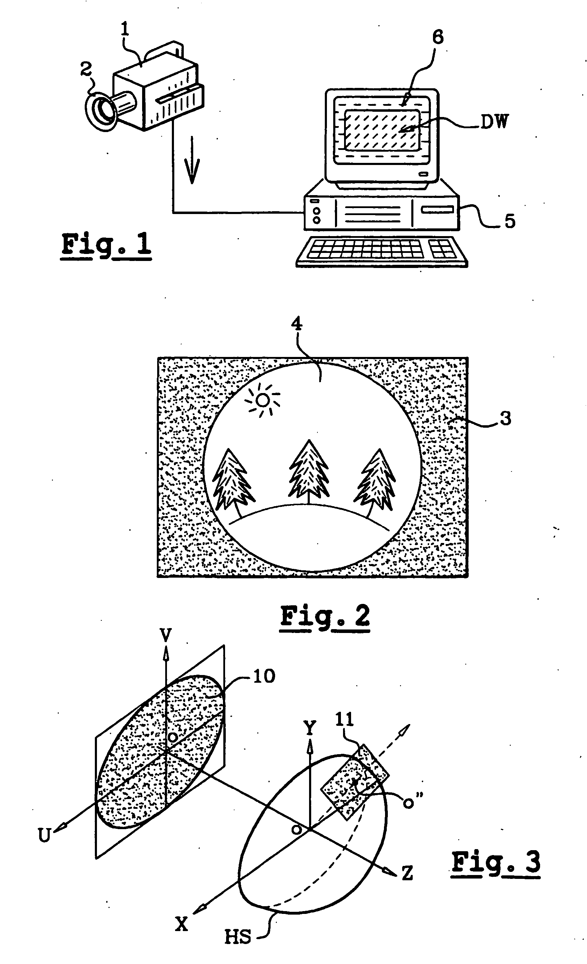

La figure 1 représente un dispositif classique permettant de réaliser une image panoramique numérique et de la présenter sur un écran d'ordinateur. Le dispositif comprend un appareil de prise de vue numérique 1 équipé d'un objectif fish-eye 2 ayant un angle de champ constant relativement à son axe optique et offrant de préférence un angle solide de capture d'image d'au moins $2\pi$ stéradians (soit un angle de champ d'au moins 180°). L'appareil 1 est connecté à un calculateur 5, par exemple un micro-ordinateur, pourvu d'un écran 6. La connexion au micro-ordinateur 5 peut être permanente, par exemple lorsque l'appareil 1 est une caméra vidéo numérique, ou temporaire, par exemple lorsque l'appareil 1 est un appareil photographique numérique pourvu d'une mémoire d'images.

La figure 2 représente schématiquement l'aspect d'une image panoramique 4 projetée sur un capteur d'image numérique 3 au moyen de l'objectif fish-eye 2. Conformément à la norme industrielle la plus répandue pour les appareils photographiques numériques grand public, le capteur d'image 3 est de forme rectangulaire, pour produire des photographies rectangulaires au format 4/3 (format vidéo). L'image du panorama projetée sur le capteur d'image a la forme d'un disque et est caractéristique de la symétrie axiale des objectifs fish-eye ayant un angle de champ constant relativement à leur axe optique. L'image complète sur le capteur d'image rectangulaire présente ainsi des bords sombres qui seront supprimés lors d'un traitement numérique ultérieur. Cette image numérique rectangulaire comprenant le disque image 4 est délivrée par l'appareil 1 sous forme d'un fichier informatique contenant des points image codés RVBA agencés dans une table à deux dimensions, "R" étant le pixel rouge d'un point image, "V" le pixel vert, "B" le pixel bleu, et "A" le paramètre Alpha ou transparence, les paramètres R, V, B, A étant généralement codés sous 8 bits.

Le fichier image est ensuite transféré dans le micro-ordinateur 5 qui transforme le disque image initial 4 en une image numérique à trois dimensions, puis présente à l'utilisateur un secteur de l'image à trois dimensions dans une fenêtre d'affichage DW occupant tout ou partie de l'écran 6.

La figure 3 illustre schématiquement des étapes classiques de transformation de l'image panoramique à deux dimensions en une image panoramique offrant un effet de perspective réaliste. Après suppression des bords noirs de l'image, le micro-ordinateur dispose d'un ensemble de points image formant un disque image 10 de centre O' et d'axes O'U et O'V. Les points image du disque image 10 sont transférés dans un espace à trois dimensions défini par un repère orthogonal d'axes OXYZ, l'axe OZ étant perpendiculaire au plan du disque image. Le transfert est assuré par une fonction mathématique mise en oeuvre par un algorithme exécuté par le micro-ordinateur, et conduit à l'obtention d'un ensemble de points image référencés dans le repère OXYZ. Ces points image sont par exemple codés en coordonnées sphériques RVBA ($\varphi$, $\theta$), $\varphi$ étant la latitude et $\theta$ la longitude d'un point image, les angles $\varphi$ et $\theta$ étant codés sur 4 à 8 octets (norme IEEE). Ces points image forment une portion de sphère HS couvrant un angle solide d'au moins $2\pi$ stéradians relativement au centre O du référentiel. Le micro-ordinateur dispose ainsi d'une image virtuelle tridimensionnelle dont un secteur 11, correspondant à la fenêtre d'affichage DW mentionnée plus haut, est présenté sur l'écran (fig. 1) en considérant que l'observateur se trouve sur le point central O du système d'axes OXYZ, qui définit avec le centre O" du secteur d'image 11 une direction OO" appelée "direction du regard".

Cette technique d'affichage sur un écran d'ordinateur d'un secteur d'image numérique panoramique présente divers avantages, notamment la possibilité "d'explorer" l'image panoramique en faisant glisser le secteur d'image 11 présenté à l'écran vers la gauche, la droite, le haut ou le bas, jusqu'à atteindre les limites de l'image panoramique. Cette technique permet également d'effectuer des rotations complètes à l'intérieur de l'image lorsque deux images numériques complémentaires ont été prises et fournies au micro-ordinateur, ce dernier reconstituant alors une sphère panoramique complète par assemblage de deux demi-sphères. Un autre avantage offert par la présentation d'une image panoramique sur écran est de permettre à l'observateur d'effectuer des grossissements, ou zooms, sur des parties de l'image. Les zooms sont effectués de façon numérique, par rétrécissement du secteur d'image affiché et dilatation de la répartition des points image sur les pixels de l'écran.

Malgré ces divers avantages, les zooms numériques présentent l'inconvénient d'être limités par la résolution du capteur d'image, qui est généralement très inférieure à celle d'une photographie conventionnelle. Ainsi, lorsque le grossissement augmente, la granulosité de l'image apparaît car on arrive aux limites de la résolution du capteur d'image.

Pour pallier cet inconvénient, il est connu de procéder à des interpolations de pixels afin de retarder l'apparition des pavés de couleur qui trahissent les limites de la résolution du capteur. Toutefois, cette méthode ne fait qu'améliorer l'aspect du secteur d'image grossi et ne permet aucunement d'apporter un surcroît de définition. Une autre solution, évidente, est de prévoir un capteur d'image présentant une résolution élevée, supérieure à la résolution nécessaire pour la présentation d'un secteur d'image sans grossissement, de sorte qu'il reste une marge de définition pour les zooms. Cette solution est toutefois coûteuse car le prix de revient d'un capteur d'image augmente rapidement avec le nombre de pixels par unité de surface. Encore une autre solution classique consiste à agencer le capteur d'image dans un plan où le diamètre du disque image est égal à la longueur du capteur d'image. On couvre alors toute la surface du capteur d'image mais l'image projetée est tronquée en haut et en bas dans le sens de la largeur du capteur d'image. L'inconvénient est dans ce cas une diminution du champ de prise de vue.

Un example de dispositif permettant de réaliser une image panoramique numerique est divulgué par le document US-A-5 686 957.

Ainsi, un objectif général de la présente invention est d'améliorer la définition offerte par des grossissements numériques portant sur certaines parties d'une image panoramique numérique, sans qu'il soit nécessaire d'augmenter le nombre de pixels par unité de surface d'un capteur d'image et sans diminution du champ de prise de vue.

Pour atteindre cet objectif, la présente invention se fonde sur deux constatations

1) les capteurs d'image rectangulaires utilisés dans les appareils photographiques numériques grand public, notamment les capteurs 4/3, ne sont pas optimisés pour la capture d'image fish-eye. Comme on l'a vu plus haut en relation avec la figure 2, les bords noirs de chaque côté du disque image 4 occupent une surface importante et représentent un nombre non négligeable de pixels perdus, au détriment de la définition et de la qualité des zooms numériques,

2) dans de nombreuses applications comme la vidéosurveillance, la vidéoconférence, la visioconférence, la zone la plus intéressante d'une image panoramique numérique est généralement située vers le centre de l'image, le long d'une ligne horizontale qui traverse le disque image de la gauche vers la droite en passant par son centre. Dans le domaine des loisirs, la plupart des images panoramiques comprennent également des parties moins intéressantes que d'autres, par exemple les parties représentant le ciel ou un plafond, ainsi que le sol, la partie la plus utile se trouvant généralement au voisinage du centre de l'image, le long de la ligne horizontale précitée. ,

Sur la base de ces constatations, l'idée de la présente invention est de prévoir une dilatation de l'image fisheye projetée sur un capteur d'image rectangulaire, en prévoyant et en utilisant un objectif fish-eye selon l'invention qui déforme les images par anamorphose et les étire latéralement sans diminution du champ de prise de vue. Ainsi, une telle dilatation est effectuée dans le sens de la longueur du capteur d'image, sans dilater l'image dans le sens de la largeur du capteur d'image afin d'éviter un débordement de l'image en dehors de la surface sensible du capteur. La zone centrale de l'image selon la ligne horizontale précitée couvre alors un nombre de pixels du capteur d'image plus important que si elle n'était pas dilatée, et bénéficie d'une meilleure définition, ce qui améliore très sensiblement la qualité des zooms numériques.

Selon un autre aspect de l'invention, on prévoit un traitement ultérieur de l'image afin de corriger les déformations optiques de l'objectif tout en conservant l'avantage d'une meilleure définition, et l'on présente un secteur d'image dépourvu de déformation dans une fenêtre d'affichage.

Plus particulièrement, la présente invention concerne un procédé de capture d'une image panoramique numérique comme défini dans la rev. independante 1.

Selon un mode de réalisation, un objectif fish-eye présente une fonction de répartition de points image qui varie selon des axes perpendiculaires à l'axe optique de l'objectif, et qui présente un taux d'étalement de l'image minimal le long d'un premier axe perpendiculaire à l'axe optique, et un taux d'étalement de l'image maximal le long d'au moins un second axe perpendiculaire à l'axe optique, de telle sorte que l'image projetée sur le capteur d'image est dilatée selon le second axe.

Selon un mode de réalisation, le premier et le second axes de l'objectif sont perpendiculaires et l'image projetée par l'objectif sur le capteur d'image est de forme ellipsoïdale.

Selon un mode de réalisation, le capteur d'image est agencé relativement aux premier et second axes de l'objectif de manière que le grand axe de l'image ellipsoïdale coïncide avec une longueur utile du capteur d'image.

Selon un mode de réalisation, le capteur d'image est agencé relativement aux premier et second axes de l'objectif de manière que le grand axe de l'image ellipsoïdale coïncide avec une diagonale du capteur d'image.

Selon un mode de réalisation, l'objectif présente une fonction de répartition qui n'est pas linéaire et qui présente une divergence maximale d'au moins $\pm 10\%$ par rapport à une fonction de répartition linéaire, de telle sorte que l'image projetée présente au moins une zone sensiblement dilatée et au moins une zone sensiblement comprimée.

Selon un mode de réalisation, l'objectif fish-eye comprend une combinaison d'un groupe de lentilles prévu pour capturer une image panoramique selon un angle de champ déterminé, et d'au moins une lentille cylindrique ayant un axe de révolution perpendiculaire à l'axe optique de l'objectif.

La présente invention concerne également un procédé d'affichage sur un écran d'une image panoramique comme défini dans la rev. indépendante 8.

Selon un mode de réalisation, l'étape de correction dans ledit procédé comprend la transformation de l'image initiale en une image numérique corrigée en forme de disque, le diamètre de l'image corrigée étant choisi de manière que l'image corrigée comprennent un nombre de points image supérieur au nombre de pixels du capteur d'image couvert par l'image initiale.

Selon un mode de réalisation, l'image initiale est de forme ellipsoïdale et l'image corrigée présente un diamètre dont la taille en nombre de pixels est au moins égale à la taille en nombre pixels du grand axe de l'image initiale ellipsoïdale.

Selon un mode de réalisation, le procédé comprend une étape de projection sur l'image initiale de points image d'un secteur d'image à présenter sur l'écran, permettant de déterminer les couleurs des points image du secteur d'image à présenter sur l'écran, l'étape de projection sur l'image initiale des points image du secteur d'image étant effectuée au moyen d'une fonction de répartition représentative des propriétés optiques de l'objectif fish-eye, de telle sorte que l'étape de correction des déformations de l'image initiale est implicite dans l'étape de projection.

Selon un mode de réalisation, l'étape de projection comprend une première étape de projection des points image du secteur d'image sur une portion de sphère, et une seconde étape de projection sur l'image initiale des points image projetés sur la portion de sphère.

La présente invention concerne également un produit programme d'ordinateur comme défini dans la rev. indépendante 13.

La présente invention concerne également un objectif fish-eye comme défini dans la rev. indépendante 14.

Selon un mode de réalisation, l'objectif présente une fonction de répartition de points image qui varie selon des axes perpendiculaires à l'axe optique de l'objectif, et qui présente un taux d'étalement de l'image minimal le long d'un premier axe perpendiculaire à l'axe optique, et un taux d'étalement de l'image maximal le long d'au moins un second axe perpendiculaire à l'axe optique, de telle sorte qu'une image délivrée par l'objectif est dilatée selon le second axe.

Selon un mode de réalisation, l'objectif présente une fonction de répartition qui n'est pas linéaire et qui présente une divergence maximale d'au moins $\pm 10\%$ par rapport à une fonction de répartition linéaire, de telle sorte qu'une image délivrée par l'objectif présente au moins une zone sensiblement dilatée et au moins une zone sensiblement comprimée.

Selon un mode de réalisation, l'objectif comprend une combinaison d'un groupe de lentilles prévu pour capturer une image panoramique selon un angle de champ déterminé, et d'au moins une lentille cylindrique ayant un axe de révolution perpendiculaire à l'axe optique de l'objectif.

Selon un mode de réalisation, l'objectif comprend des moyens optiques formant apodiseur.

Selon un mode de réalisation, les moyens optiques formant apodiseur comprennent au moins une lentille asphérique.

Selon un mode de réalisation, l'objectif comprend au moins un miroir déformant.

Selon un mode de réalisation, l'objectif est du type adaptateur panoramique et est prévu pour être placé devant un objectif non panoramique d'appareil photographique.

Ces objets, caractéristiques et avantagés ainsi que d'autres de la présente invention seront exposés plus en détail dans la description suivante du procédé selon l'invention et d'un exemple de réalisation d'un objectif fish-eye selon l'invention, faite à titre non limitatif en relation avec les figures jointes parmi lesquelles :

- la figure 1 précédemment décrite représente un système classique d'affichage sur un écran d'une image panoramique numérique,
- la figure 2 précédemment décrite représente une image panoramique de type fish-eye projetée sur un capteur d'image rectangulaire,
- la figure 3 précédemment décrite illustre un procédé classique de transformation d'une image panoramique à deux dimensions en une image panoramique numérique à trois dimensions,
- la figure 4 est une vue en coupe schématique d'un système de capture d'image panoramique comprenant un objectif fish-eye selon l'invention,
- les figures 5A, 5B, 5C représentent des propriétés optiques d'un objectif fish-eye utilisé pour mettre en oeuvre le procédé de capture d'image selon l'invention,
- la figure 6 représente un système d'affichage d'une image panoramique numérique,
- les figures 7A et 7B illustrent un premier procédé de correction d'une image panoramique selon l'invention,
- la figure 8 est un organigramme décrivant un procédé d'affichage d'une image panoramique incorporant le premier procédé de correction,
- la figure. 9 illustre un second procédé de correction d'une image panoramique selon l'invention,
- la figure 10 est un organigramme décrivant un procédé d'affichage d'une image panoramique incorporant le second procédé de correction,
- la figure 11 illustre par une vue en coupe un exemple de réalisation objectif fish-eye selon l'invention,
- la figure 12 est une vue éclatée en coupe d'un système de lentilles présent dans l'objectif de la figure 11,
- la figure 13 illustre une variante du procédé de capture d'image panoramique selon l'invention, et
- les figures 14A et 14B illustrent une autre variante du procédé de capture d'image panoramique selon l'invention, et
- les figures 15A et 15B illustrent encore une autre variante du procédé de capture d'image panoramique selon l'invention.

**Description d'un procédé de capture d'image panoramique selon l'invention**

**I - Déformation d'une image initiale**

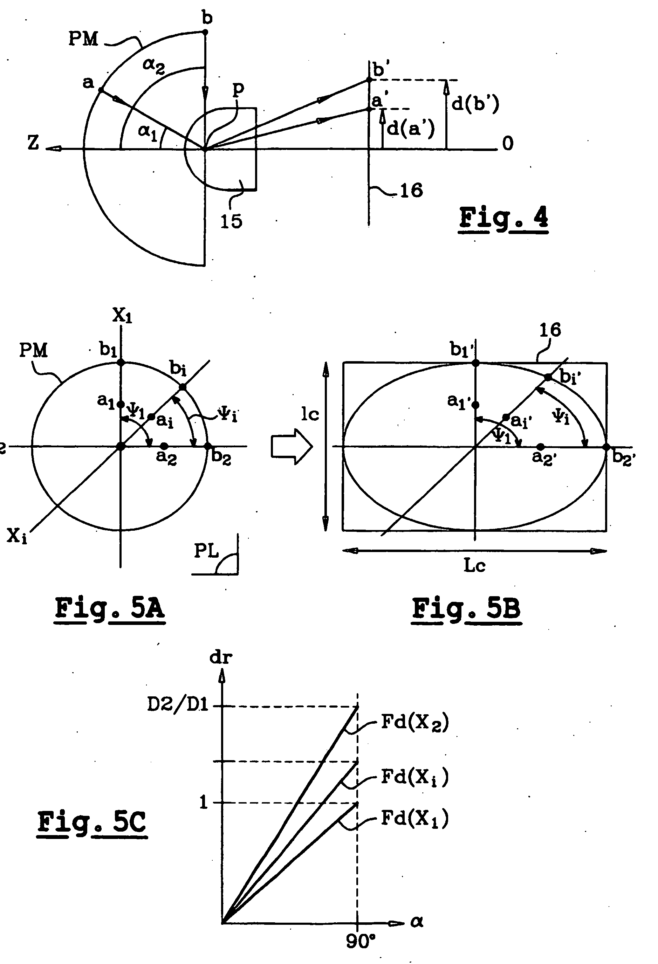

La figure 4 représente schématiquement, par une vue en coupe, un système de capture d'image panoramique comprenant un objectif fish-eye 15 selon l'invention ayant un angle de champ constant relativement à son axe optique OZ, ainsi qu'un capteur d'image rectangulaire 16 agencé dans le plan image de l'objectif 15.

Vu dans le plan de coupe de la figure 4, les propriétés de l'objectif fish-eye 15 sont conformes à celles d'un objectif classique et se caractérise par une fonction de répartition angulaire Fd déterminée. Considérons à titre d'exemple deux points objet a, b appartenant à un panorama PM et présentant respectivement des angles de champ $\alpha 1$, $\alpha 2$. De façon conventionnelle, l'angle de champ d'un point objet est l'angle que présente relativement à l'axe optique OZ un rayon lumineux incident passant par le point objet considéré et par le centre du panorama PM, repéré par un point "p". Sur le capteur 16, des points image a', b' correspondant aux points objet a, b se trouvent à des distances d(a'), d(b') du centre de l'image qui sont liées aux angles $\alpha 1$, $\alpha 2$ par les relations suivantes :

$$(1) \quad d(a') = Fd \ (\alpha 1)$$

$$(2) \quad d(b') = Fd \ (\alpha 2)$$

Fd étant la fonction de répartition des points image relativement à l'angle de champ des points objet.

L'objectif 15 selon l'invention diffère d'un objectif classique par le fait que la fonction de répartition Fd varie selon la position des points objet dans un plan perpendiculaire à l'axe optique OZ. Ceci sera mieux compris en se référant aux figures 5A, 5B et 5C qui illustrent les propriétés de cet objectif.

La figure 5A représente le panorama PM sous la forme d'un cercle, l'axe optique OZ étant ici perpendiculaire au plan de la figure. L'objectif présente deux axes X1, X2 se trouvant dans un plan PL perpendiculaire à l'axe optique OZ (soit parallèle ou confondu avec le plan de la feuille), chacun des deux axes X1, X2 passant par l'axe optique OZ. L'écart angulaire entre les deux axes X1, X2 est désigné $\psi 1$ et est de préférence égal à 90°. Selon l'invention, l'objectif présente une fonction de répartition Fd[X1] le long de l'axe X1 et une fonction de répartition Fd[X2] le long de l'axe X2. Les fonctions Fd[X1] et Fd[X2] sont différentes, la fonction Fd[X1] étant celle qui présente un plus faible taux d'étalement de l'image et la fonction Fd[X2] celle qui présente un plus fort taux d'étalement de l'image.

Pour fixer les idées, considérons deux couples de points objet a1, b1 et a2, b2 agencés respectivement le long de l'axe X1 et de l'axe X2, les points a1 et a2 ayant le même angle de champ $\alpha 1$ et les points b1 et b2 le même angle de champ $\alpha 2$ relativement à l'axe optique OZ (Cf. figure 4). La figure 5B représente la projection de ces points sur le capteur d'image rectangulaire 16. L'objectif est agencé relativement au capteur d'image 16 de manière que l'axe de plus faible étalement X1 coïncide avec la largeur du capteur et que l'axe de plus fort étalement X2 coïncide avec la longueur du capteur. L'axe X2 correspond de préférence à l'axe horizontal d'une prise de vue et l'axe X1 correspond à l'axe vertical. Sur l'image projetée, représentée en fig. 5B, on distingue des points image a1', b1' le long de l'axe X1 et des points image a2', b2' le long de l'axe X2. Le point a1' est à une distance $d(a1') = F[X1](\alpha 1)$ du centre de l'image, le point b1' est à une distance $d(b1') = F[X1] \ (\alpha 2)$ du centre de l'image, le point a2' est à une distance $d(a2') = F[X2](\alpha 1)$ du centre de l'image et le point b2' est à une distance $d(b2') = F[X2](a2)$ du centre de l'image. Avec un objectif fish-eye classique, la distance d(a2') serait égale à la distance d(a1') car les points objet a1, a2 ont le même angle de champ $\alpha 1$. De même, la distance d(b2') serait égale à la distance d(b1') car les points objet b1, b2 ont le même angle de champ a2. Avec l'objectif fish-eye selon l'invention, la distance d(b2') est supérieure à la distance d(b1') et la distance d(a2') est supérieure à la distance d(a1').

De préférence, la fonction Fd[X1] est choisie de manière que les points image présents le long de l'axe X1 occupent toute la largeur utile lc du capteur. De même, la fonction Fd[X2] est choisie de manière que les points image présentes le long de l'axe X2 occupent toute la longueur utile Lc du capteur. Ainsi, si les angles de champ des points objet b1, b2 sont égaux à 90°, comme cela est représenté sur les figures 4 et 5A, et si l'angle d'ouverture de l'objectif est de 180°, les distances d(b1'), d(b2') relativement au centre de l'image des points image b1' , b2' sont respectivement égales lc/2 et Lc/2 (fig. 5B).

Outre les axes X1 et X2, l'objectif selon l'invention présente une infinité d'axes intermédiaires Xi le long desquels l'objectif présente des fonctions de répartition. Fd[Xi] ayant un taux d'étalement déterminé supérieur au taux d'étalement minimal. Considérons à titre d'exemple un axe Xi présentant un angle $\psi i$ relativement à l'axe X1, avec $\psi i$ inférieur à $\psi 1$,

et deux points objet ai, bi situés le long de l'axe Xi et présentant des angles de champ α1, a2 (fig. 5A). Les points image correspondants ai', bi' sur le capteur 16 (fig. 5B) se trouvent à des distances d(ai') = F[Xi](α1) et d(bi') = F[Xi])(α2) relativement au centre de l'image. Les distances d(ai') et d(bi') sont respectivement supérieures à d(a1') et d(b1').

Ainsi, la fonction de répartition Fd d'un objectif fish-eye selon l'invention varie en fonction de l'axe le long duquel se trouvent les points objet, dans un plan perpendiculaire à l'axe optique OZ, et présente un taux d'étalement minimal selon l'axe X1 et un taux d'étalement maximal selon au moins un second axe, soit l'axe X2 dans l'exemple décrit ci-dessus.

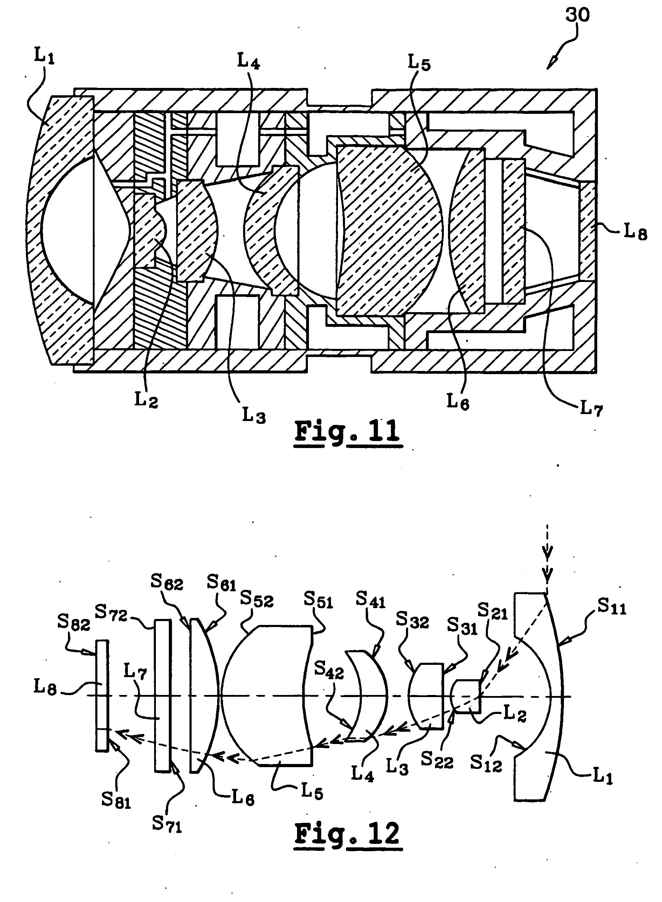

On décrira plus loin en relation avec les figures 11 et 12 un mode de réalisation d'un objectif selon l'invention qui délivre une image ellipsoïdale, grâce à l'emploi d'une lentille toroïdale ayant un axe de révolution parallèle à l'axe optique, équivalente à un lentille cylindrique ayant un axe de révolution perpendiculaire à l'axe optique. Sur la figure 58, le point image ai' se trouve alors sur une ellipse passant par les points a1' et a2' et le point image bi' se trouve sur une ellipse passant par les points b1' et b2'.

D'autre part, toujours selon le mode de réalisation décrit plus loin en relation avec les figures 11 et 12, la fonction Fd est linéaire le long de chaque axe Xi de l'objectif, de sorte que la distance d(ai') par rapport au centre de l'image d'un point image ai' obéit à la relation suivante :

$$(3) \quad d(ai') = Ki \; \alpha i$$

dans laquelle αi est l'angle de champ du point objet correspondant ai, et Ki une constante de répartition qui est fonction de l'axe Xi le long duquel se trouve le point objet.

Pour fixer les idées, des exemple de fonctions de répartition Fd[Xi] d'un objectif selon l'invention sont représentées sous forme de courbes en figure 5C, sur un graphe comprenant en ordonnées des distances relatives dr et en abscisse des angles de champ α. La distance relative dr d'un point image est la distance du point image par rapport au centre de l'image divisée par la plus grande distance relativement au centre de l'image d'un point image situé sur l'axe X1. Dans le cas d'une image ellipsoïdale, cette plus grande distance le long de l'axe X1 est la demi-longueur D1/2. du petit axe de l'ellipsoïde.

On distingue ainsi sur la figure 5C trois courbes correspondant aux trois fonctions de répartition Fd[X1], Fd[X2], Fd[Xi]. Dans cet exemple, ces fonctions de répartition sont linéaires et sont ainsi en forme de droites, de pentes respectives K1, K2 et Ki. La pente K1 est égale à 1/90° pour un objectif ayant un angle d'ouverture de 180°, la pente K2 est supérieure à K1 et la pente Ki est comprise entre K1 et K2. Comme indiqué plus haut, la pente K2 est de préférence égale à K1*Lc/lc afin que l'image couvre toute la longueur utile Lc du capteur d'image.

Dans ce qui suit, les autres aspects de la présente invention seront décrits en considérant le cas d'une projection d'une image ellipsoïdale sur le capteur d'image. On désignera cette image ellipsoïdale un "ellipsoïde image" tandis que l'image en forme de disque classique sera appelé un "disque image", conformément à la terminologie usuelle.

L'avantage du procédé de l'invention est que la surface couverte par l'image projetée est supérieure à celle couverte par un disque image, sans diminution du champ de prise de vue, de sorte que le nombre de pixels couverts par l'image est plus élevé. Le gain en définition obtenu grâce à la présente invention, exprimé en un rapport de pixels, est aisé à calculer dans le cas d'une image ellipsoïdale. A la surface du capteur d'image, l'ellipsoïde image couvre un nombre de pixels NP égal à :

$$(4) \quad NP = \pi(D1/2)*(D2/2)*Np$$

Np étant le nombre pixels du capteur par unité de surface, D2 étant le grand axe et D1 le petit axe de l'image ellipsoïdale (notons ici que D1 est imposé par la largeur utile lc du capteur et que D2 peut être au maximum égal à la longueur utile Lc du capteur).

En comparaison, le nombre de pixels NP' couvert par un disque image est de :

$$(5) \quad NP' = \pi(D1^2/4)*Np$$

D1 étant le diamètre de l'image, imposé par la largeur du capteur.

En combinant les relations (4) et(5), le pourcentage G% de pixels gagnés entre un ellipsoïde image et un disque image est égal à :

$$(6) \quad G\% = (D1/D2 - 1)*100$$

Le nombre de pixels que comprennent à l'heure actuelle les capteurs d'image des appareils photographiques numériques grand public est de l'ordre de 2 millions de pixels, soit 1600x1200 pixels, le rapport 4/3 correspondant au standard du marché grand public de la photographie numérique. Un objectif selon l'invention assurant une projection ellipsoïdale offre dans ces conditions un gain de 33% en nombre de pixels couverts, ce qui représente un gain en définition non négligeable le long de l'axe X2 et dans les parties de l'image se trouvant au voisinage de l'axe X2.

Ce gain est encore plus important quand le procédé selon l'invention est mis en oeuvre avec un appareil photographique conventionnel utilisant une pellicule ayant un rapport longueur sur largeur de 3/2 (format 24*36 des pellicules du commerce). La photographie réalisée est ensuite numérisée avec un scanner ayant une définition déterminée. Après numérisation, le gain en nombre de pixels couverts (à définition constante lors de la numérisation) est alors de 50%.

Il sera donc noté ici que le procédé selon l'invention est applicable aussi bien aux techniques de photographie numérique utilisant des capteurs d'image numériques qu'aux techniques de photographie numérique comprenant une étape de réalisation d'une photographie conventionnelle suivie d'une étape de numérisation de la photographie au moyen d'un scanner. Ainsi, dans la présente demande, le terme "capteur d'image numérique" désigne aussi bien un capteur d'image numérique qu'une pellicule photographique conventionnelle combinée avec un dispositif de numérisation comme un scanner.

**II - Correction des déformations de l'image initiale**

On a décrit dans ce qui précède un premier aspect de l'invention, selon lequel on prévoit une dilatation d'une image projetée sur un capteur d'image afin d'améliorer la définition de l'image dans des zones dilatées, par augmentation du nombre de pixels du capteur d'image couvert par les zones dilatées. Avant de décrire un exemple de réalisation d'un objectif fish-eye selon l'invention, on décrira un deuxième aspect de l'invention qui consiste à corriger les déformations de l'image initiale afin de présenter à l'observateur une image dépourvue de déformation optique. Comme indiqué ci-dessus, la description de cet aspect de l'invention sera faite en référence à un ellipsoïde image.

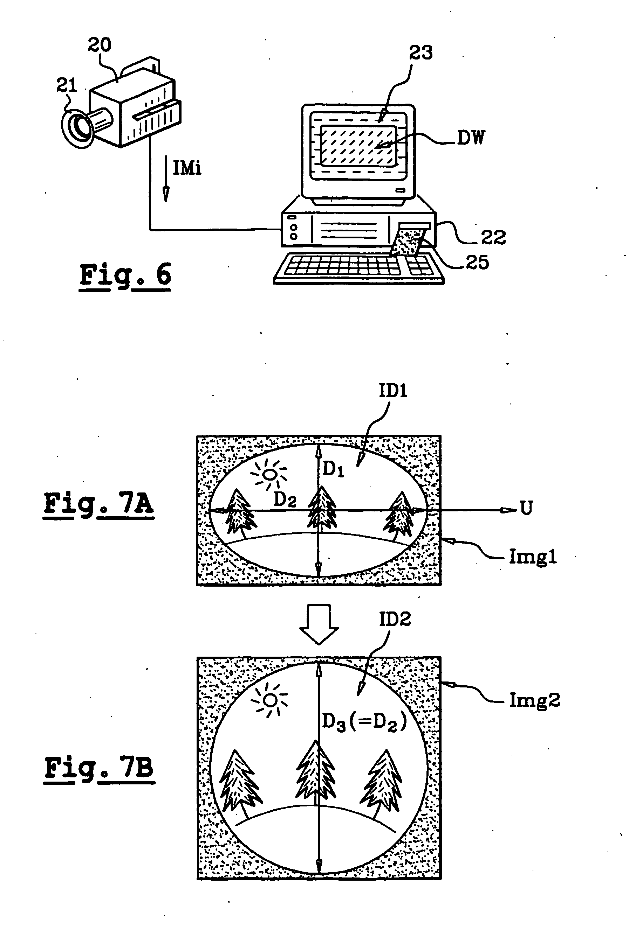

Ce deuxième aspect de l'invention est mis en oeuvre au stade du traitement par ordinateur de l'image initiale, pour la présentation d'une image panoramique interactive sur un écran. Les moyens de mise en oeuvre du procédé de l'invention sont illustrés en figure 6 et sont en soi classiques en ce qui concerne leur agencement général. On distingue un appareil de prise de vue numérique 20 équipé d'un objectif fish-eye 21, ici un objectif selon l'invention, connecté à un micro-ordinateur 22 comprenant un écran 23. Des images, numériques IMi prises au moyen de l'appareil 20 sont transférées au micro-ordinateur pour être traitées et affichées sur l'écran 23, dans une fenêtre d'affichage DW. Un programme de traitement selon l'invention, comprenant un algorithme de transformation et d'affichage des images est préalablement chargé dans le micro-ordinateur, par exemple au moyen d'un Cd-rom 25 ou par téléchargement via l'Internet. L'appareil 20 peut être un appareil photographique numérique ou une caméra vidéo numérique et la connexion au micro-ordinateur peut être permanente ou non. Dans le cas d'une caméra vidéo, le micro-ordinateur reçoit un flux d'images qu'il traite en temps réel pour les afficher sur l'écran.

Dans ce contexte, la présente invention prévoit deux manières de corriger les déformations de l'image initiale. Selon un premier mode de réalisation, l'ellipsoïde image est corrigé de manière à obtenir un disque image classique. Le disque image corrigé est équivalent à un disque image issu d'un objectif fish-eye classique et peut ensuite être traité par tout logiciel d'affichage classique disponible dans le commerce, prévu pour transférer les points image d'un disque image dans un espace à trois dimensions et pour procéder à l'affichage interactif sur un écran d'un secteur de l'image tridimensionnelle. Selon un second mode de réalisation, l'image est corrigée en temps réel au moment de la détermination des points image constituant le secteur d'image à présenter dans la fenêtre d'affichage DW, en faisant intervenir la fonction de répartition angulaire Fd de l'objectif.

**Premier mode de réalisation du procédé de correction**

Les figures 7A et 7B illustrent le premier mode de réalisation du procédé selon l'invention. On suppose ici que l'on dispose d'une image initiale Img1 comportant un ellipsoïde image ID1 de petit axe D1 et de grand axe D2 (fig. 7A). L'image initiale Img1 es transformée en une image corrigée Img2 comportant un disque image ID2 de rayon D3 (fig. 7B). Le rayon D3 du disque image ID2 est de préférence égal au grand axe D2 de l'ellipsoïde image ID1, de sorte que le disque image ID2 présente une résolution égale ou sensiblement égale à la résolution offerte par la zone la plus étirée de l'ellipsoïde image ID1, là où se trouve la plus grande densité d'information. Il s'agit ici de la partie centrale de l'image se trouvant au voisinage du grand axe D2.

Ce procédé comprend consiste donc à étirer l'image verticalement dans une proportion de (D2/D1)*100 pour cent. Il peut être mis en oeuvre au moyen de l'algorithme 1 décrit ci-après à titre d'exemple, dans lequel :

- Img1 est l'image initiale comprenant l'ellipsoïde image ID1,
- Img2 est l'image d'arrivée générée par l'algorithme 1, comprenant un disque image classique ID2,
- a est la demi longueur du petit axe de l'ellipsoïde image ID1, exprimée en nombre de pixels, soit a = D1/2*Np1, Np1 étant le nombre de pixels par unité de longueur du capteur d'image utilisé,
- b est la demi longueur du grand axe de l'ellipsoïde image ID1, exprimée en nombre de pixels, soit b = D2/2*Np1,
- b est également le rayon du disque image ID2, exprimé en nombre de pixels,
- "O" désigne le centre de l'image initiale Img1 ainsi que le centre de l'image d'arrivée Img2,
- i et j sont les coordonnées d'un point image Img2[i,j] dans l'image Img2, i désignant les colonnes, j les lignes, le point de coordonnées (0,0) étant au centre de l'image,
- r est la distance au centre de l'image d'un point image dans l'image Img2,
- "u" et "v" sont les coordonnées d'un point image Img1 [u, v] dans l'image initiale Img1, "u" désignant les colonnes, "v" les lignes, le point de coordonnées (0,0) étant au centre de l'image,
- [OU) est un axe de référence de direction U ayant son origine en O,
- [OP] est un segment de droite ayant un point d'origine en O et un point d'extrémité en P, P étant un point image de coordonnées (u,v),
- θ est un angle entre l'axe [OU) et un segment [OP], "√" est la fonction racine carrée. "arc cos" est la fonction inverse de la fonction cosinus

ALGORITHME 1

```
1/   Pour i = -b à +b
2/     Pour j = -b à +b
3/            r = √ (i*i+j*j)
4/            Si (r ≤ b) alors
5/                 Si j<0 alors
6/                      θ = arc cos(i/r)
7/                 Sinon
8/                      θ = -arc cos (i/r)
9/                 Fin si
10/              u = r*cos (θ)
11/              v = (a/b) *r* sin (θ)
12/              Img2 [i,j] = Img1 [u, v]
13/           Fin si
14/     Fin pour
15/  Fin pour
```

En pratique, l'algorithme 1 peut être amélioré en effectuant a posteriori une interpolation bilinéaire sur l'image Img2, en soi bien connue de l'homme de l'art, afin de lisser l'image finale.

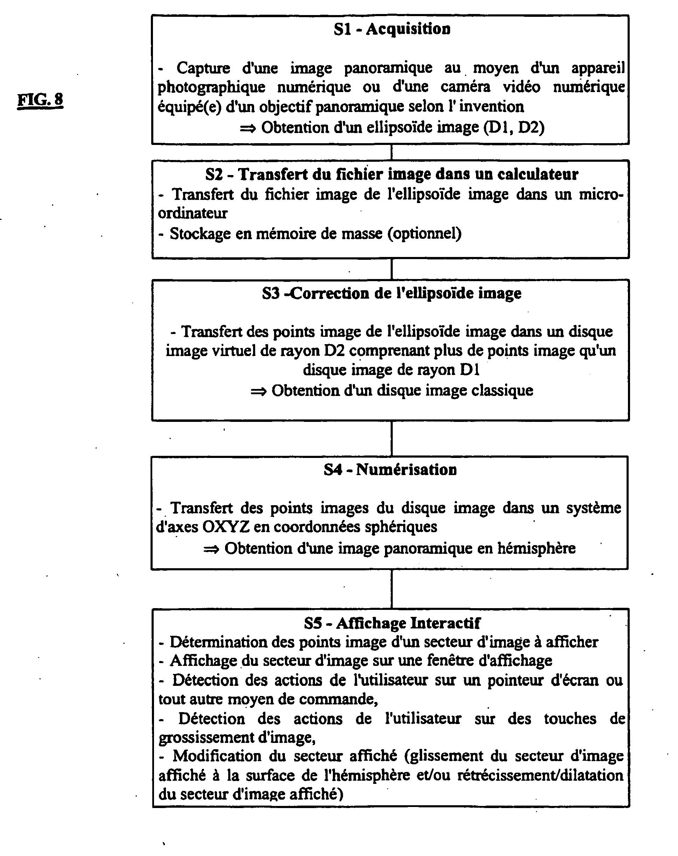

La figure 8 est un organigramme donnant un aperçu général des étapes d'un procédé de capture et de présentation interactive d'une image panoramique sur un écran. Cet organigramme est décrit par le tableau 1 figurant en Annexe, faisant partie intégrante de la description. Les étapes S1 et S2, respectivement d'acquisition de l'image et de transfert de l'image dans un calculateur, sont en soi classiques et se distinguent de l'art antérieur par le fait que l'image capturée est de forme ellipsoïdale. L'étape S3 de correction de l'ellipsoïde image ID1 est exécutée conformément au procédé de l'invention, par exemple au moyen de l'algorithme décrit ci-dessus. L'étape S4, dite de "numérisation"; est également classique. Cette étape consiste à transférer les points image du disque image ID2 dans un espace à trois dimensions d'axes OXYZ dans lequel les points image sont par exemple référencés en coordonnées sphériques. L'étape S5 est également classique et consiste à présenter dans la fenêtre d'affichage DW un secteur de l'image. La fenêtre d'affichage est déplacée vers le haut ou vers le bas en fonction des actions de l'utilisateur, ou fait l'objet d'un grossissement sur demande de l'utilisateur. Lors d'un grossissement, on bénéficie d'une meilleure définition que dans l'art antérieur dans les zones correspondant aux parties dilatées de l'image initiale.

**Second mode de réalisation du procédé de correction**

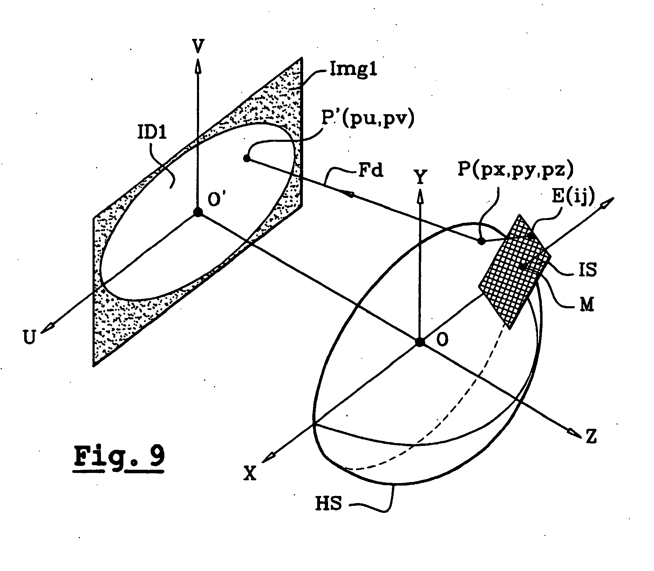

Le deuxième mode de réalisation du procédé de correction selon l'invention est illustré en figure 9. Très schématiquement, ce procédé consiste à projeter sur l'ellipsoïde image ID1 de l'image initiale Img1 les points image d'un secteur d'image IS à présenter dans la fenêtre d'affichage DW (fig. 6). Ce procédé ne nécessite pas le calcul d'un disque image corrigé.

Les points image du secteur d'image IS à afficher dans la fenêtre DW sont référencés E(i,j) dans le repère du secteur d'image IS, qui est exprimé en coordonnées de lignes i et en coordonnées de colonnes j. Les points E(i,j) sont tout d'abord projetés sur une portion de sphère HS de centre O et de rayon R dans un repère d'origine O et d'axes OX, OY, OZ, pour obtenir des points image P(px,py,pz) appartenant à la portion de sphère.

Dans un souci de simplicité, il sera considéré que l'objectif fish-eye qui est utilisé ici présente un angle d'ouverture de 180°. La portion de sphère HS est dans ce cas une hémisphère. Le secteur d'image IS se déplace tangentiellement à cette hémisphère.

Les points image P(px,py,pz) déterminés sur l'hémisphère HS sont ensuite projetés sur l'ellipsoïde image ID1 au moyen de la fonction de répartition Fd de l'objectif fish-eye, ce qui nécessite le calcul préalable de l'angle de champ α des points P par rapport au centre O de l'hémisphère, le centre O étant l'équivalent virtuel du centre "p" du panorama au moment de la capture d'image. La projection des points image P(px,py,pz) sur l'hémisphère HS permet d'obtenir des points image P' (pu, pv) sur l'ellipsoïde image, dans un repère de centre O' correspondant au centre de l'ellipsoïde image et d'axes O'U et O'V. L'axe OZ dans le référentiel de l'hémisphère est perpendiculaire au plan de l'ellipsoïde image ID1 et passe par le centre O', de sorte que les axes O'Z et OZ sont confondus.

Comme cela apparaîtra clairement à l'homme de l'art, la correction des déformations de l'image est implicite ici puisque l'on va "chercher" sur l'ellipsoïde image ID1, au moyen de la fonction de répartition Fd, les points image P' (pu,pv) correspondant aux points image E(i, j) du secteur d'image IS.

Le procédé selon l'invention est mis en oeuvre au moyen de l'algorithme 2 décrit ci-après, dans lequel :

- i et j sont les coordonnées d'un point E(i, j) du secteur d'image IS,
- Imax et Jmax sont le nombre de colonnes et le nombre de lignes du secteur d'image IS,
- Ex, Ey et Ez sont les coordonnées cartésiennes dans le repère OXYZ d'un point E(i,j) du secteur d'image IS,
- px, py et pz sont les coordonnées cartésiennes d'un point P(px, py, pz) sur l'hémisphère HS,
- pu et pv sont les coordonnées cartésiennes dans le repère O'UV d'un point image P'(pu,pv) de l'ellipsoïde image,
- L1 est la taille du demi petit axe de l'ellipsoïde image, exprimée en nombre de pixels (L1 = D1/2*Np1),
- L2 est la taille du demi grand axe de l'ellipsoïde image, en nombre de pixels (L1 = D2/2*Np1),
- M est le centre du secteur d'image IS,
- la "direction regard" est la direction matérialisée par le point O et le centre M du secteur d'image IS, le secteur d'image formant la base d'une pyramide de vision de l'observateur dont le sommet est le point O (position de l'observateur),
- θ0 et φ0 sont les longitude et latitude de la direction du regard,
- Pixel_Ecran[i,j] est la couleur (RVBA) d'un point E (i,j) du secteur d'image IS,
- Pixel_Image[pu,pv] est la couleur d'un point P'(pu,pv) de l'ellipsoïde image ID1,
- R est le rayon de l'hémisphère HS servant de référence pour les glissements tangentiels du secteur d'image IS, R ayant une valeur arbitraire choisie de manière à améliorer la précision des calculs, par exemple 10000,
- α est l'angle par rapport au centre O d'un point image P(px,py,pz) (représente l'angle de champ au moment de la prise de vue du point objet correspondant),
- aux1, aux2 sont des variables intermédiaires,
- "Zoom" est une variable définissant le grossissement, ayant une valeur par défaut égale à R, et
- "√" est la fonction racine carrée.

## ALGORITHME 2

```
1/ Pour i=-Imax/2 à i=Imax/2 faire [par incréments de 1]
2/    Pour j=-Jmax/2 à j=Jmax/2 faire [par incréments de 1]
[calcul des coordonnées cartésiennes Ex, Ey, Ez du point E du
secteur d'image dans le système de coordonnées (OXYZ)]
3/          Ey = j*cos(φ0) - Zoom*sin(φ0)
4/          Ez = Zoom*cos(φ0) + j*sin(φ0)
5/          aux1 = Ez
6/          Ez = Ez*cos(θ0) - i*sin(θ0)



7/          Ex = i*cos(θ0) + aux1*sin(θ0)
[calcul des coordonnées d'un point P correspondant au point
E]
8/          aux2 = R/√(Ex*Ex + Ey*Ey + Ez*Ez)
9/          px = Ex*aux2
10/         py = Ey*aux2
11/         pz = Ez*aux2
[calcul des coordonnées d'un point P'(pu,pv) correspondant au
point P(px,py,pz)]
12/         X = px/R
13/         Y = py/R
14/         r = √(X*X + Y*Y)
15/         α = arc sinus(r) [angle par rapport au centre]
16/         U = X/r
17/         V = Y/r
18/         pu = L1*U*Fd(α)
19/         pv = L2*V*Fd(α)
[attribution de la couleur du point P'(pu,pv) au point E(i,j)
du secteur d'image]
20/         Pixel_Ecran[i,j] = Pixel_Image[pu,pv]
21/    fin pour
22/ fin pour
```

On notera que la fonction Fd utilisée ici aux étapes 18 et 19 n'est pas une fonction Fd[Xi] qui dépend de l'axe Xi considéré mais est la fonction Fd[X1] selon l'axe X1. On a en effet choisi ici de simplifier l'algorithme pour ne pas tenir compte de l'angle $\psi$, ceci étant rendu possible par la forme ellipsoïdale de l'image ID1. L'adaptation des étapes 18 et 19. à la forme ellipsoïdale de l'image est assurée par les paramètres L1 et L2. Si la fonction Fd[X1] est linéaire, chaque valeur de Fd(a) est calculable au cours des étapes 18 et 19 au moyen de la relation suivante :

$$Fd(\alpha) = Fd[X1](\alpha) = K1*\alpha$$
$$avec\ K1 = 2\pi/\alpha$$

Une demande de grossissement (zoom) par l'utilisateur conduit l'algorithme à modifier le paramètre "Zoom". Lorsque le paramètre "Zoom" est égal au rayon R de l'hémisphère, aucun zoom n'est réalisé. Lorsque le paramètre "Zoom" est supérieur à R, la fenêtre DW s'éloigne de l'hémisphère HS (en suivant l'axe donné par la direction du regard 0M), ce qui correspond à un rétrécissement de la pyramide de vision et donc à un grossissement du secteur d'image présenté dans la fenêtre DW. Le grossissement du secteur d'image présenté à l'observateur est donc égal au rapport des paramètres "Zoom" et R.

Lorsque l'algorithme est exécuté avec un paramètre "Zoom" supérieur à R, on gagne en définition dans les zones où l'image a été dilatée lors de la prise de vue car il existe toujours, tant que la limite de résolution n'est pas atteinte, deux points image sur l'ellipsoïde image ID1 qui correspondent à deux pixels adjacents du secteur d'image. Dans les zones non dilatées de l'image, la recherche du pixel le plus proche au moyen des relations L1*U*Fd($\alpha$) et L2*V*Fd($\alpha$) conduit au contraire l'algorithme à trouver sur l'ellipsoïde image ID1 le même point image pour plusieurs pixels adjacents du secteur d'image IS. Toutefois ces zones d'image non dilatées bénéficiant d'une moindre définition sur l'ellipsoïde image, équivalente à celle obtenue avec un objectif fish-eye classique, sont considérées comme secondaires pour l'application visée, conformément au postulat sur lequel se fonde la présente invention.

De façon générale, il apparaîtra clairement à l'homme de l'art que d'autres méthodes de projection peuvent être prévues, l'essentiel étant de retrouver l'angle de champ $\alpha$ des points objet sur l'hémisphère HS, par rapport au centre O, afin de faire intervenir dans les calculs la fonction de répartition Fd.

L'algorithme 2 est bien entendu applicable lorsque l'on dispose de deux ellipsoïdes image complémentaires, l'un correspondant à une photographie avant et l'autre à une photographie arrière d'un panorama, la deuxième photographie étant prise en faisant pivoter l'objectif fish-eye selon l'invention de 180° autour d'un axe passant par le centre du panorama. On définit dans ce cas deux hémisphères complémentaires et deux points image appelés "Pixel_Image_Devant" et "Pixel_Image_Derriere". Les étapes 18 et suivantes de l'algorithme sont alors modifiées ainsi :

```
18'/       pu = L1*U*Fd (α)
19'/       pv = L2*V*Fd(α)
20'/       Si pz >= 0 alors
21'/          Pixel_Ecran [i,j] = Pixel_Image_Devant[pu,pv]
22'/       Sinon
23'/          Pixel_Ecran [i,j] = Pixel_Image_Derriere[L1-pu,pv]
24'/       Fin si
25'/    fin pour
26'/ fin pour
```

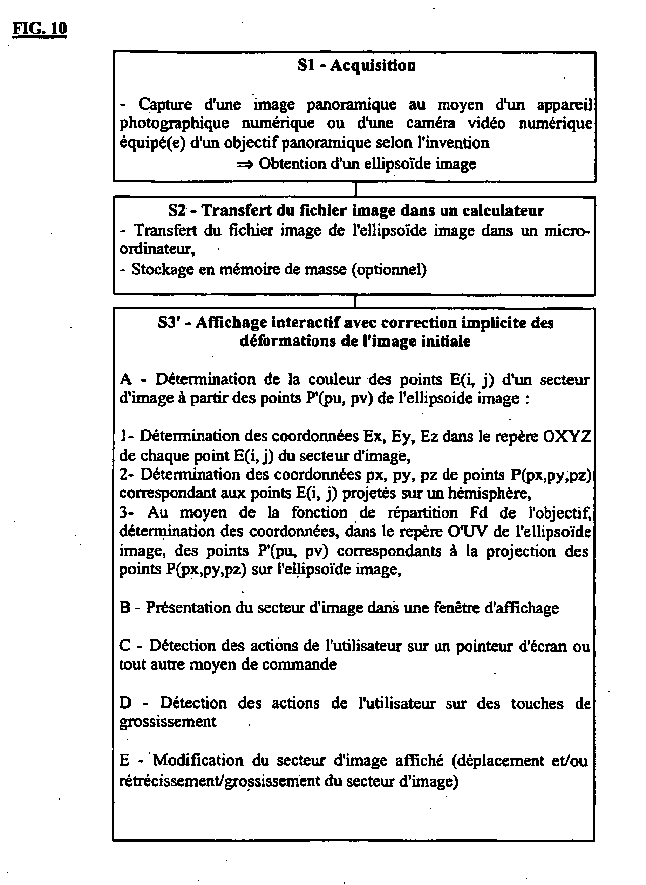

La figure 10 est un organigramme donnant un aperçu général des étapes d'un procédé de capture et de présentation interactive d'une image panoramique sur un écran. Cet organigramme est décrit par le tableau 2 figurant en Annexe, faisant partie intégrante de la description. On y retrouve les étapes d'acquisition S1 et de transfert S2 décrites plus haut. L'étape S2 est suivie d'une étape d'affichage interactif S3' faite conformément au procédé qui vient d'être décrit, incorporant implicitement une correction des déformations de l'ellipsoïde image grâce à l'utilisation de la fonction de répartition Fd de l'objectif pour retrouver sur l'ellipsoïde image les points correspondants aux pixels du secteur d'image.

### III - Exemple de réalisation d'un objectif fish-eye selon l'invention

La conception d'un objectif fish-eye à projection ellipsoïdale est basée ici sur l'utilisation de lentilles cylindriques. Ce type de lentille est déjà connu en soi et utilisé dans le domaine du cinéma pour l'obtention des lentilles au format cinémascope. Ce type de lentille est également utilisé dans les lecteurs de disque compact afin de positionner avec une grande précision le faisceau laser sur la surface d'un disque compact.

Dans le cadre de la présente invention, des lentilles cylindriques (également appelées lentilles toroïdales quand le rayon de courbure est infini) sont utilisées dans le but d'augmenter la résolution dans le sens de la longueur du capteur d'image, en combinaison avec des lentilles assurant une capture d'image de type fish-eye. L'effet technique visé peut être obtenu grâce à une ou plusieurs lentilles cylindriques placées à une extrémité d'un groupe de lentilles équivalentes à un objectif fish-eye, l'image étant étirée suivant la perpendiculaire de l'axe du cylindre.

Un mode de réalisation particulier d'un objectif selon l'invention est décrit ci-après à titre d'exemple non limitatif.

La figure 11 est une vue en coupe d'un objectif fish-eye 30 selon l'invention. L'objectif 30 est ici du type adaptateur panoramique ("pano-converter") et est destiné à être fixé sur la lentille frontale d'un appareil photographique. Il concerne aussi les appareils grand public du type non-SLR (non Reflex) comprenant un objectif fixe de 35 mm.

L'objectif 30 comprend, dans le sens de l'entrée des rayons lumineux (gauche de la figure) vers la sortie des rayons lumineux, huit lentilles L1 à L8. La lentille L1 est une lentille asphérique en acrylique de type ménisque divergent, dont la face avant est convexe et la face arrière concave. La lentille L2 est une lentille sphérique en acrylique de type ménisque convergent, dont la face avant est concave et la face arrière convexe. La lentille L3 est une lentille asphérique en acrylique de type biconvexe. La lentille L4 est une lentille asphérique et diffractive (asphéro-diffractive) du type ménisque convergent dont la face avant est convexe et la face arrière concave, la face arrière comprenant un réseau de diffraction. La lentille L5 est une lentille asphérique en acrylique de type ménisque convergent, dont la face avant est concave et la face arrière convexe. La lentille L6 est une lentille sphérique plan-convexe en BK7 (borosilicate ou verre minéral standard utilisé en optique), dont la face avant est convexe.

Selon l'invention, les lentilles L7 et L8 sont des lentilles cylindriques ayant un axe de révolution perpendiculaire à l'axe optique. Pour l'homme de l'art, de telles lentilles sont l'équivalent d'une portion de tore de rayon infini ayant un axe de révolution parallèle à l'axe optique. La lentille L7 est une lentille cylindrique plan-concave en BK7 dont la face arrière est concave (la concavité n'apparaît pas sur la figure 11 en raison de la faible valeur de la flèche). La lentille L8 est une lentille cylindrique de type plan-convexe en BK7, ayant sa face avant convexe (même remarque).

Très schématiquement, la lentille L1 permet de capturer une image panoramique selon un angle de champ souhaité, ici un angle de champ de 185°. La face arrière de la lentille L2 correspond à une pupille, et forme le diaphragme principal du système optique. La lentille L4 est une lentille de champ qui participe à l'imagerie pupillaire. Le surface diffractive dont est pourvue cette lentille, en sus de sa fonction dioptrique, provoque un déphasage de l'onde lumineuse répondant à une loi polynomiale du rayon d'ouverture. Les lentilles L8 et L7 réalisent la déformation ellipsoïdale recherchée. Les autres lentilles n'ont pas de rôle particulier, mais elles participent à l'obtention du résultat final et aux performances globales de l'objectif selon l'invention.

Un mode de réalisation détaillé de l'objectif adaptateur panoramique 30 est décrit par le tableau 3 figurant en annexe, faisant partie intégrante de la description. Le tableau 3 décrit les propriétés de chaque surface en référence à la figure 12, qui est une vue éclatée du système de lentille. Sur cette figure, les faces avant et arrière de la lentille L1 sont référencées S11 et S12, les faces avant et arrière de la lentille L2 sont référencées S21 et S22, les faces avant et arrière de la lentille L3 sont référencées S31 et S32, etc. , les faces avant et arrière de la lentille L8 étant référencées S81 et S82.

Les surfaces asphériques sont déterminées au moyen d'une équation de surface du type :

$$z(r) = [(C*r^2)/(1 + \sqrt{(1-(1+k)*C^2*r^2)})] + A_1 r^2 + A_2 r^4 + A_3 r^6 + A_4 r^8 + A_5 r^{10}$$

dans laquelle :

"k" est une constante de conicité,
"A1", "A2", "A3", "A4", "A5" sont des constantes d'ajustement du coefficient de conicité en fonction de la position,
"z" est la forme de la surface,
"r" est le rayon au centre, et
"C" est le rayon de courbure.

Les épaisseurs et les diamètres sont exprimés en millimètres. La conicité est une grandeur sans dimension, une conicité de "0" désignant un cercle de révolution, une conicité de "-1" désignant une parabole de révolution, une conicité comprise entre "-1" et "+1" désignant une ellipse de révolution, une conicité inférieure à -1 ou supérieure à +1 désignant une hyperbole de révolution, les coefficients Ai dans l'équation de surface permettant d'ajuster la forme générale.

La face diffractive de la lentille L4 est déterminée au moyen d'une formule du type :

$$\Phi(r) = \beta 1 \ (r/R0)^2 + \beta 2 \ (r/R0)^4$$

dans laquelle :

"r" est la distance par rapport au centre de la lentille d'un point considéré, se trouvant à la surface de la lentille,

β1 et β2 sont des constantes définissant le déphasage de la surface d'onde,

"R0" est une constante permettant de normaliser r, et

"Φ" est le déphasage introduit par la surface diffractive au point considéré.

Il apparaîtra clairement à l'homme de l'art que la combinaison de lentilles qui vient d'être décrite ne constitue qu'un exemple de réalisation permettant de se rapprocher de la forme rectangulaire du capteur d'image. On pourra également prévoir des objectifs utilisant des lentilles toriques ou bi-toriques de forme plus complexe, par exemple un tore à surface asphérique. Dans une variante de réalisation, un objectif selon l'invention peut être réalisé au moyen d'un système optique de type indirect, c'est-à-dire utilisant des miroirs. En particulier, un miroir de surface cylindrique ou toroïdale peut être utilisé pour déformer et étaler l'image à la surface du capteur d'image.

## IV - Portée de la présente invention - variantes de réalisation

On a décrit dans ce qui précède un procédé de capture d'image panoramique au moyen d'un objectif fish-eye et d'un capteur d'image numérique de forme rectangulaire, dans lequel l'objectif est conçu pour déformer l'image panoramique afin de couvrir un plus grand nombre de pixels sur le capteur d'image sans diminution du champ de prise de vue. On a également décrit un procédé d'affichage sur un écran d'un secteur d'une image panoramique obtenue selon ce procédé, comprenant une étape de correction de l'image panoramique déformée. Cette étape de correction peut comprendre la correction de l'image avant sa transformation dans un espace à trois dimensions, conduisant à l'obtention d'un disque image classique. La correction peut aussi être implicite et intervenir au moment de la projection sur l'image initiale non corrigée d'un secteur d'image à présenter sur l'écran, en faisant intervenir la fonction de répartition de l'objectif

ou une fonction mathématique s'en rapprochant.

Il apparaîtra clairement à l'homme de l'art que la présente invention est susceptible de diverses variantes tant en ce qui concerne les propriétés optiques de l'objectif fish-eye utilisé ou son agencement relativement au capteur d'image, que dans les étapes de traitement ultérieur de l'image panoramique obtenue. La présente invention est également susceptible de diverses applications. Outres les applications à la photographie et à la vidéo, la présente invention est notamment applicable au domaine médical, par exemple en endoscopie, où des capteurs d'image rectangulaires sont généralement utilisés. Les angles de champ des lentilles utilisées dans ces applications sont généralement inférieurs à 180° et plutôt de l'ordre de 140°.

## Variante concernant l'agencement relatif du capteur d'image et des axes X1 et X2 de l'objectif

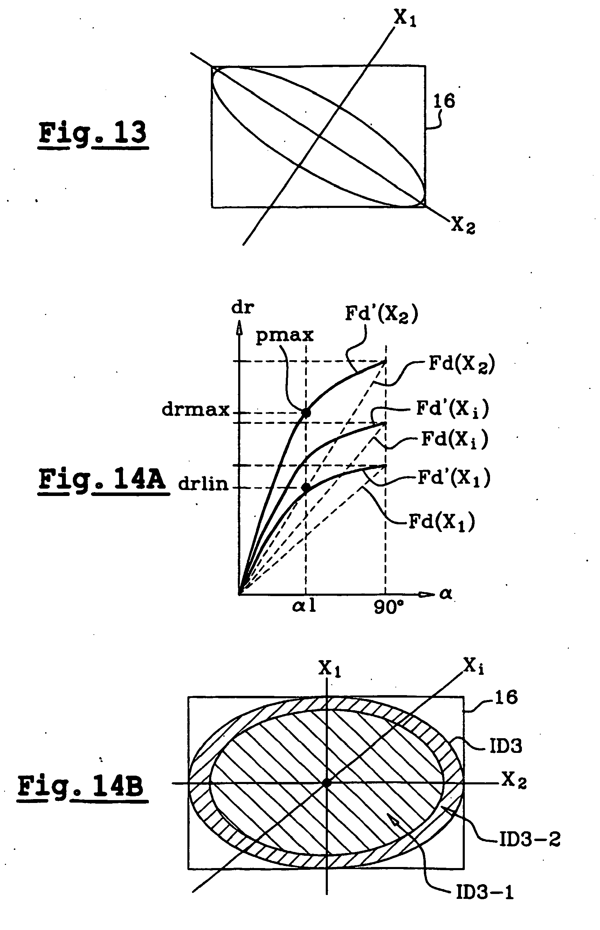

La figure 13 représente une variante de réalisation du procédé de l'invention dans laquelle l'objectif et le capteur d'image sont agencés l'un relativement à l'autre de manière que l'axe X2 (axe de plus fort étalement) coïncide avec une diagonale du capteur d'image 16. Ce mode de réalisation permet de couvrir un plus grand nombre de pixels du capteur d'image le long de l'axe X2. L'objectif présente ici, selon l'axe X1 (axe de plus faible étalement), une fonction de répartition F[X1] qui comprime l'image relativement à un objectif fish-eye classique. Ce mode de réalisation revient à donner priorité maximale à la définition de l'image selon l'axe X2, qui en pratique peut correspondre à l'axe horizontal d'une prise de vue.

## Variante comprenant la prévision d'un objectif fish-eye non linéaire

Dans une variante avantageuse du procédé de l'invention, on prévoit un objectif qui présente en outre selon ses axes Xi des fonctions de répartition Fd'[Xi] non linéaires. Pour fixer les idées, les figures 14A et 14B illustrent les propriétés d'un objectif fish-eye non linéaire à projection elliptique. La figure 14A est un graphe comprenant en ordonnées la distance relative dr d'un point image (distance relative par rapport au centre de l'image) et en abscisse l'angle de champ α du point objet correspondant. Sur ce graphe sont représentées les deux fonctions de répartition les plus significatives de l'objectif, à savoir les fonctions Fd'[X1] et Fd'[X2] selon les axes X1 et X2, et une fonction de répartition Fd'[Xi] selon un axe quelconque Xi. Les fonctions linéaires Fd[X1], Fd[X2], Fd[Xi] décrites plus haut en relation avec la figure 5C sont représentées en traits pointillés en tant que points de comparaison.

Pour des angles de champ inférieurs à un angle α1, les fonctions Fd'[X1], Fd'[X2], Fd'[Xi] présentent chacune une pente supérieure à la pente K1, K2, Ki de la fonction linéaire correspondante Fd[X1], Fd[X2], Fd[Xi]. Cela signifie que les points image correspondant à des points objet ayant un angle de champ compris entre 0 et α1 sont projetés sur le capteur d'image avec un taux d'étalement supérieur aux constantes K1, K2, Ki et sont ainsi plus éloignés les uns des autres. Pour des angles de champ supérieurs à l'angle α1, les fonctions Fd'[X1], Fd'[X2], Fd'[Xi] présentent chacun une pente inférieure à la pente K1, K2, Ki de la fonction linéaire correspondante Fd[X1], Fd[X2], Fd[Xi]. Cela signifie que les points image correspondant à des points objet ayant un angle de champ compris entre α1 et A/2 (A étant l'angle d'ouverture de l'objectif) sont plus proches les uns des autres.

Un ellipsoïde image ID3 obtenu avec un tel objectif non linéaire est représenté en figure 14B. L'ellipsoïde image présente une zone centrale ellipsoïdale ID3-1 où l'image est dilatée, et une zone périphérique ID3-2 où l'image est comprimée. On obtient ainsi une combinaison de deux effets techniques. Le premier effet technique est l'augmentation de définition due à l'étalement de l'image le long de l'axe X2. Le deuxième effet technique est une augmentation supplémentaire de définition dans la zone centrale ID3-1 de l'image, au détriment de la zone comprimée ID3-2 qui est considérée comme moins importante. La zone dilatée bénéficie d'une définition élevée car elle couvre un plus grand nombre de pixels sur le capteur d'image, tandis que la zone comprimée bénéficie d'une définition plus faible.

En pratique, une divergence maximale d'au moins ±10% en par rapport à une fonction de répartition linéaire est nécessaire pour obtenir une dilatation d'image procurant un avantage sensible lors d'un zoom numérique. On appelle "divergence" l'écart en pourcentage entre la distance par rapport au centre d'un point image et la distance par rapport au centre qui serait obtenue pour le même point image si la fonction de répartition était linéaire. La divergence maximale est la divergence mesurée en un point où la fonction non linéaire est la plus éloignée de la fonction linéaire correspondante. Si l'on considère à titre d'exemple la courbe Fd'[X2] sur la figure 14A, on voit qu'il existe un point image pmax où la courbe Fd'[X2] est la plus éloignée de la courbe linéaire Fd[X2]. En désignant par drmax la distance relative du point pmax et par *drlin* la distance relative que présenterait ce point par rapport au centre de l'image si la fonction de répartition était linéaire, la divergence maximale est ici égale à :

$$\text{DIVmax\%} = [[\mathit{drmax} - \mathit{drlin}]/[\mathit{drlin}]]*100$$

En pratique, la réalisation d'un objectifs présentant des fonctions de répartition non linéaires Fd'[X1], Fd'[X2], Fd'[Xi] est à la portée de l'homme de l'art en ajoutant un groupe de lentilles formant apodiseur dans un objectif selon l'invention. Les apodiseurs sont des systèmes optiques bien connus de l'homme de l'art, utilisés par exemple en tant que filtres pour couvrir l'ouverture d'un instrument optique afin de supprimer les anneaux secondaires d'une figure de diffraction. Ici, l'idée de l'invention est d'utiliser un apodiseur dans un but différent, c'est-à-dire pour contrôler la répartition angulaire d'un objectif panoramique et obtenir la non-linéarité recherchée.

En pratique, un apodiseur peut être réalisé de façon simple au moyen d'une ou de plusieurs lentilles asphériques combinées éventuellement avec une surface diffractive. Un tel groupe optique peut par exemple comprendre une lentille plan-concave ayant une face avant concave et asphérique, une lentille plan-convexe ayant sa face plane orientée vers l'avant, un ménisque ayant une face avant concave et asphérique et une face arrière convexe diffractive.

L'obtention de plusieurs fonctions non linéaires Fd'[X1], Fd'[X2], Fd'[Xi] à partir d'une fonction non linéaire Fd définie par l'apodiseur est assurée par un groupe de lentilles du type décrit plus haut, comprenant par exemple des lentilles cylindriques.

Une autre manière permettant d'introduire un apodiseur dans un objectif du type décrit plus haut est de prévoir un système optique comprenant un miroir plan qui renvoie le faisceau lumineux sur un miroir déformant de forme concave asphérique, le faisceau réfléchi par le miroir déformant étant envoyé sur le capteur d'image. Dans un tel mode de réalisation, les irrégularités de sphéricité que présente la partie concave du miroir déterminent la fonction de répartition angulaire Fd recherchée pour l'application visée (déformation au centre, sur les bords...).

**Généralisation du procédé de correction et de l'algorithme 2**

Il doit être noté ici que les outils modernes de conception de lentilles assistée par ordinateur peuvent permettre de réaliser tout type d'objectif selon l'invention, assurant une projection d'un panorama sous la forme d'une image de forme quelconque couvrant plus de pixels qu'un disque image, présentant une fonction de répartition linéaire ou non linéaire, utilisant des systèmes optiques directs ou indirects (miroirs).

Dans ces conditions, et en prévision des divers modèles d'objectifs selon l'invention susceptibles d'être réalisés, il est utile de prévoir une généralisation du procédé de correction selon l'invention.

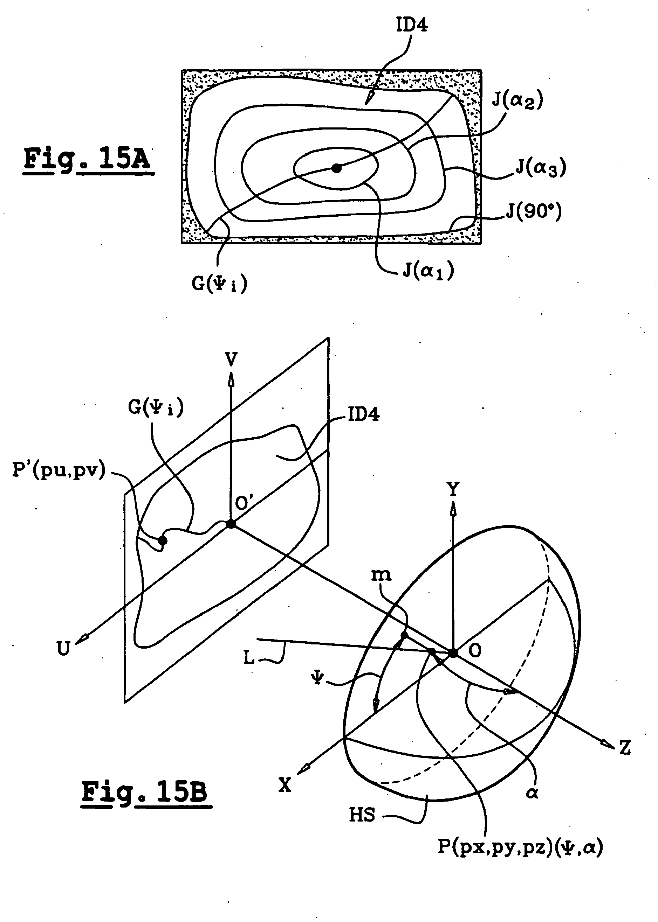

La figure 15A illustre le cas où un objectif fish-eye selon l'invention projette sur un capteur d'image une image déformée ID4 de forme quelconque qui tend à se rapprocher de la forme rectangulaire du capteur. On distingue plusieurs courbes J($\alpha$1), J(a2), J($\alpha$3), J($\alpha$=90°) constituées chacune par des points image correspondant à des points objet ayant le même angle de champ $\alpha$1, a2, a3, $\alpha$=90°. On distingue également une courbe G($\psi$i) qui représente la projection d'un ensemble de points objet se trouvant le long d'un même axe Xi d'angle $\psi$i, l'angle $\psi$i étant mesuré ici par rapport à l'un des deux axes de plus fort étalement X2, X2' que comprend l'objectif (ces axes, non représentés, coïncident sensiblement avec les deux diagonales du capteur d'image). On voit ici que la courbe G ($\psi$i) , ou projection de l'axe Xi sur le capteur d'image, n'est pas rectiligne en raison de défauts physiques des lentilles entraînant naturellement une telle déformation. Une telle déformation ne constitue nullement un obstacle à la mise en oeuvre du procédé de correction selon l'invention et nécessite seulement que la pluralité de fonctions de répartition Fd[Xi] ($\alpha$) de l'objectif selon l'invention soient quantifiée lors de la conception de l'objectif assistée par ordinateur. Une telle quantification des fonctions Fd[Xi] peut prendre la forme d'une table donnant pour chaque point objet défini par des angles ψ, α la position du point image correspondant sur l'image déformée ID4. Afin d'économiser l'espace mémoire du micro-ordinateur chargé de l'affichage de l'image ID4 (sous la forme d'un secteur d'image interactif glissant tangentiellement à une portion de sphère), la table peut être échantillonnée en supprimant un certain nombre de points objets. La fonction de répartition Fd [ψi] (αi) pour chaque point objet supprimé est alors calculable par interpolation des fonctions de répartition des points objets adjacents.

En référence à la figure 15B, considérons à titre d'exemple un point P (px, py, pz) qui est la projection sur une portion de sphère HS d'un point image E(i,j) d'un secteur d'image à présenter sur un écran (non représenté ici). Le point P(px,py,pz) présente des angles ψ et α déterminés. L'angle ψ est l'angle que présente relativement à l'axe OX un point "m" qui est la projection du point P(px,py,pz) dans le plan OXY. L'angle α est l'angle par rapport à l'axe OZ que présente un segment de droite L passant par le point P(px,py,pz) et par le centre O de la portion de sphère HS. Comme cela a été expliqué plus haut, le point P(px,py,pz) est l'équivalent d'un point objet du panorama photographié, le centre O de la portion de sphère HS est l'équivalent du centre du panorama photographié, le segment de droite L est l'équivalent d'un rayon lumineux incident, l'axe OZ représente l'axe optique de l'objectif et l'angle α représente l'angle de champ du point objet P(px,py,pz).

Considérons ensuite que les angles α et ψ sont compris entre les angles suivants :

$$\psi i < \psi < \psi i+1$$

$$\alpha j < \alpha < \alpha j+1$$

et que les fonctions de répartition de l'objectif ont été quantifiées pour les angles αi, αi+1, ψi, ψi+1, par exemple dans une table T1 décrite partiellement ci-après.

Les coordonnées (pu,pv) d'un point P'(pu,pv) qui est la projection du point P(px,py,pz) sur l'image déformée ID4, sont aisées à calculer par interpolation, par exemple une interpolation sur quatre valeurs :

$$pu = [(pu)i,j + (pu)i+1,j + (pu)i,j+1 +(pu)i+1,j+1]/4$$

$$pv = [(pv)i,j + (pv)i+1,j + (pv)i,j+1 +(pv)i+1,j+1]/4$$

Table T1

|  |  |  | ψi | ψyi+1 | ... |  |
|---|---|---|---|---|---|---|
| ... |  |  |  |  |  |  |
| αj |  |  | (pu) i,j// (pv) i,j | (pu) i+1, j// (pv) i+1, j |  |  |
| αj+1 |  |  | (pu) i, j+1// (pv) i, j+1 | (pu) i+1, j+1// (pv) i+1, j+1 |  |  |
| ... |  |  |  |  | ... |  |
|  |  |  |  |  |  |  |

Ainsi, l'algorithme 2 décrit plus haut peut être généralisé en remplaçant les lignes 16 à 19 par les étapes suivantes :

[*recherche de l'angle ψ*]

Si px>0 alors

$$\psi = arc\ cos(px/\sqrt{(px^2+py^2)})$$

sinon si px<0

$$\psi = -\text{arc cos}(px/\sqrt{(px^2+py^2)}$$

sinon si px=0 et py>0 alors

$$\psi = \pi/2$$

sinon si px=0 et py<0 alors

$$\psi = -\pi/2$$

sinon

$$\psi = 0$$

Finsi

$$pu = L2 * Fd[\psi](\alpha)(1)$$

$$pv = L2 * Fd[\psi](\alpha)(2)$$

Dans ces étapes, Fd[ψ] (α) (1) désigne la coordonnée "pu" d'un point P'(pu,pv) correspondant à la projection sur l'image ID4 d'un point P(px,py,pz) appartenant à l'hémisphère HS, le point P étant lui-même la projection d'un point E(i,j) appartenant au secteur d'image à afficher (non représenté en figure 15B). De même, Fd [ψ] (α) (2) désigne la coordonnée "pv" du point P' (pu, pv).

On généraliste ainsi l'algorithme 2 à tout type d'objectif au sens de l'invention. Dans le cas d'une image elliptique linéaire, la fonction Fd [ψ] (α) peut être exprimée sous la forme mathématique suivante et ne nécessite pas l'élaboration d'une table de quantification :

$$Fd[\psi](\alpha)= [\cos(\psi)*2*(\pi/\alpha)*(L1/L2) \; ; \; \sin(\psi)*2*(\pi/\alpha)]$$

L'exemple qui vient d'être décrit montre qu'un objectif selon l'invention peut présenter plusieurs axes de plus fort étalement (X2, X2'). Cet exemple montre également que le ou les axes de plus fort étalement ne sont pas nécessairement perpendiculaires à l'axe X1 de plus faible étalement.

**ANNEXE (faisant partie intégrante de la rescription)**

**Tableau 1**

| S1 - Acquisition |
|---|
| - Capture d'une image panoramique au moyen d'un appareil photographique numérique ou d'une caméra vidéo numérique équipé(e) d'un objectif fish-eye selon l'invention $\Rightarrow$ Obtention d'un ellipsoïde image (D1, D2) |

(suite)

| S2 - Transfert du fichier image dans un calculateur |
|---|
| - Transfert du fichier image de l'ellipsoïde image dans un micro-ordinateur, |
| - Stockage en mémoire de masse (optionnel) |
| **S3 - Correction de l'ellipsoïde image** |
| - Transfert des points image de l'ellipsoïde image dans un disque image virtuel de rayon D2 comprenant plus de points image qu'un disque image de rayon D1,<br>⇒ Obtention d'un disque image classique. |
| **S4 - Numérisation** |
| - Transfert des points image du disque image dans un système d'axes OXYZ en coordonnées sphériques,<br>⇒ Obtention d'une image panoramique hémisphérique |
| **S5 - Affichage Interactif** |
| - Détermination des points image d'un secteur d'image à afficher, |
| - Affichage du secteur d'image sur une fenêtre d'affichage, |
| - Détection des actions de l'utilisateur sur un pointeur d'écran ou tout autre moyen de commande, |
| - Détection des actions de l'utilisateur sur des touches de grossissement d'image, |
| - Modification du secteur affiché (glissement du secteur d'image affiché à la surface de l'hémisphère et/ou rétrécissement/dilatation du secteur d'image affiché) |

**Tableau 2**

| S1 - Acquisition |
|---|
| - Capture d'une image panoramique au moyen d'un appareil photographique numérique ou d'une caméra vidéo numérique équipé(e) d'un objectif fish-eye selon l'invention<br>⇒ Obtention d'un ellipsoïde image |
| **S2 - Transfert du fichier image dans un calculateur** |
| - Transfert du fichier image de l'ellipsoïde image dans un micro-ordinateur, |
| - Stockage en mémoire de masse (optionnel) |

(suite)

---

**S3' - Affichage interactif avec correction implicite des déformations de l'image initiale**

    A - Détermination de la couleur des points E(i, j) d'un secteur d'image à partir des points P'(pu, pv) de l'ellipsoide image :

        1- Détermination des coordonnées Ex, Ey, Ez dans le repère OXYZ de chaque point E(i, j) du secteur d'image, 2- Détermination des coordonnées px, py, pz de points P(px,py,pz) correspondant aux points E(i, j) projetés sur un hémisphère, 3- au moyen de la fonction de répartition Fd de l'objectif, détermination des coordonnées, dans le repère O'UV de l'ellipsoïde image, des points P'(pu, pv) correspondants à la projection des points P(px,py,pz) sur l'ellipsoïde image, B - Présentation du secteur d'image dans une fenêtre d'affichage C - Détection des actions de l'utilisateur sur un pointeur d'écran ou tout autre moyen de commande D - Détection des actions de l'utilisateur sur des touches de grossissement E - Modification du secteur d'image affiché (déplacement et/ou rétrécissement/grossissement du secteur d'image)

---

Tableau 3

| Surfaces | Type | Commentaire | Rayon de courbure | Epaisseur | Type de verre | Diamètre | Conicité |
|---|---|---|---|---|---|---|---|
| S11 | SPHERIQUE | | -39.55 | 35 | | 39.5 | -4.07 |
| S12 | SPHERIQUE | | -12.74 | 1.75 | ACRYLIQUE | 23 | 0 |
| S21 | SPHERIQUE | | 14.17 | 12.93 | | 0.65 | 0 |
| S22 | SPHERIQUE | | 4.61 | 4.87 | ACRYLIQUE | 6.5 | 0 |
| S31 | ASPHERIQUE | | -77.92 | 1.19 | | 10 | 6.12 |
| S32 | SPHERIQUE | | 11.57 | 6.41 | ACRYLIQUE | 13 | 0 |
| S41 | DIFFRACTIVE | | -9.82 | 3.75 | | 17.1 | -0.555 |
| S42 | SPHERIQUE | | -12.71 | 4.58 | ACRYLIQUE | 16.5 | 0 |
| S51 | SPHERIQUE | | -19.34 | 10.46 | | 20 | 0 |
| S52 | ASPHERIQUE | | -34.68 | 14.69 | ACRYLIQUE | 25.5 | 0.0858 |
| S61 | SPHERIQUE | | -26.35 | 0.45 | | 25.4 | 0 |
| S62 | SPHERIQUE | | Infini | 5.2 | BK7 | 25.4 | 0 |
| S71 | TOROIDALE | ANAMORPHOSE | Infini | 3 | | 20 | 0 |
| S72 | SPHERIQUE | | Infini | 3.1 | BK7 | 20 | 0 |
| S81 | SPHERIQUE | | Infini | 8 | | 16 | 0 |
| S82 | TOROIDALE | ANAMORPHOSE | Infini | 2 | BK7 | 16 | 0 |

**Revendications**

1. Procédé de capture d'une image panoramique numérique au moyen d'un capteur d'image (16) et d'un objectif fish-eye ayant un angle de champ constant relativement à son axe optique, le capteur d'image étant de forme rectangulaire, **caractérisé en ce qu'**il comprend les étapes consistant à :

   - prévoir un objectif fish-eye comprenant des moyens optiques anamorphiques, et à
   - projeter sur le capteur d'image (16), sans diminution du champ de prise de vue, au moyen de l'objectif fish-eye comprenant des moyens optiques anamorphiques, une image panoramique (ID1, ID3) déformée par anamorphose qui n'est pas en forme de disque et qui couvre sur le capteur d'image un nombre de pixels supérieur au nombre de pixels qui serait couvert par un disque image conventionnel non déformée par anamorphose (4).

2. Procédé selon la revendication 1, dans lequel l'objectif fish-eye comprenant des moyens optiques anamorphiques présente une fonction (Fd[Xi], Fd'[Xi]) de répartition de points image qui varie selon des axes (Xi) perpendiculaires à l'axe optique (OZ) de l'objectif, et qui présente un taux d'étalement de l'image minimal le long d'un premier axe (X1) perpendiculaire à l'axe optique, et un taux d'étalement de l'image maximal le long d'au moins un second axe (X2) perpendiculaire à l'axe optique, de telle sorte que l'image projetée sur le capteur d'image est dilatée selon le second axe (X2).

3. Procédé selon la revendication 2, dans lequel le premier (X1) et le second (X2) axes de l'objectif sont perpendiculaires et l'image (ID1) projetée par l'objectif sur le capteur d'image est de forme ellipsoïdale.

4. Procédé selon la revendication 3, dans lequel le capteur d'image (16) est agencé relativement aux premier et second axes de l'objectif de manière que le grand axe (D2) de l'image ellipsoïdale (ID1) coïncide avec une longueur utile (Ld) du capteur d'image.

5. Procédé selon la revendication 3, dans lequel le capteur d'image (16) est agencé relativement aux premier et second axes de l'objectif de manière que le grand axe (X2) de l'image ellipsoïdale coïncide avec une diagonale du capteur d'image.

6. Procédé selon l'une des revendications 2 à 5, dans lequel l'objectif fish-eye comprenant des moyens optiques anamorphiques présente en outre une fonction de répartition (Fd'[Xi]) qui n'est pas linéaire et qui présente une divergence maximale d'au moins ±10% par rapport à une fonction de répartition linéaire (Fd[Xi]), de telle sorte que l'image projetée (ID3) présente au moins une zone sensiblement dilatée (ID3-1) et au moins une zone sensiblement comprimée (ID3-2).

7. Procédé selon l'un des revendications 1 à 6, dans lequel l'objectif fish-eye comprenant des moyens optiques anamorphiques comprend une combinaison d'un groupe de lentilles (L1-L6) prévu pour capturer une image panoramique selon un angle de champ déterminé, et les moyens optiques anamorphiques comprennent au moins une lentille cylindrique (L7, L8) ayant un axe de révolution perpendiculaire à l'axe optique de l'objectif.

8. Procédé d'affichage sur un écran (23) d'une image panoramique (ID1), **caractérisé en ce qu'**il comprend :

   - une étape de capture d'une image panoramique initiale déformée au moyen d'un capteur d'image de forme rectangulaire et d'un objectif fish-eye comprenant des moyens optiques anamorphiques conduite conformément au procédé selon l'une des revendications 1 à 7, et
   - une étape de correction (S3, S3') des déformations anamorphiques de l'image initiale.

9. Procédé selon la revendication 8, dans lequel l'étape de correction (S3) comprend la transformation de l'image panoramique initiale déformée en une image numérique corrigée (ID2) en forme de disque, le diamètre de l'image corrigée étant choisi de manière que l'image corrigée comprennent un nombre de points image supérieur au nombre de pixels du capteur d'image couvert par l'image initiale.

10. Procédé selon la revendication 9, dans lequel l'image: panoramique initiale déformée (ID1) est de forme ellipsoïdale et l'image corrigée (ID2) présente un diamètre (D3) dont la taille en nombre de pixels est au moins égale à la taille en nombre pixels du grand axe (D2) de l'image initiale ellipsoïdale (ID1).

11. Procédé selon la revendication 8, comprenant une étape de projection sur l'image panoramique initiale déformée (ID1) de points image (E(i,j)) d'un secteur d'image (IS) à présenter sur l'écran (23), permettant de déterminer les couleurs des points image du secteur d'image à présenter sur l'écran, l'étape de projection sur l'image panoramique initiale déformée (ID1) des points image (E(i,j)) du secteur d'image (IS) étant effectuée au moyen d'une fonction de répartition (Fd) représentative des propriétés optiques de l'objectif fish-eye, de telle sorte que l'étape de correction (S3'-) des déformations de l'image initiale est implicite dans l'étape de projection.

12. Procédé selon la revendication 11, dans lequel l'étape de projection comprend une première étape de projection des points image (E(i,j)) du secteur d'image (IS) sur une portion de sphère (HS), et une seconde étape de projection sur l'image panoramique initiale déformée (ID1) des points image (P(px,py,pz)) projetés sur la portion de sphère.

13. produit programme d'ordinateur enregistré sur un support (25) et chargeable dans la mémoire d'un ordinateur numérique (22), **caractérisé en ce qu'**il contient des codes programme exécutables par l'ordinateur, agencés pour l'exécution des étapes de correction du procédé d'affichage selon l'une des revendications 8 à 12.

14. Objectif fish-eye ayant un angle de champ constant relativement à son axe optique et comprenant des moyens optiques (L1-L8) pour projeter l'image d'un panorama (PM) sur un capteur d'image (16), **caractérisé en ce qu'**il comprend des moyens optiques anamorphiques (L7-L8) pour projeter, sans diminution du champ de prise de vue, une image (ID1, ID3) déformée par anamorphose qui n'est pas en forme de disque et qui couvre sur un capteur d'imagé un nombre de pixels supérieur au nombre de pixels qui serait couvert par un disque image conventionnel non déformée par anamorphose (4).

15. Objectif selon la revendication 14, présentant une fonction (Fd[Xi], Fd'[Xi]) de répartition de points image qui varie selon des axes (Xi) perpendiculaires à l'axe optique (OZ) de l'objectif, et qui présente un taux d'étalement de l'image minimal le long d'un premier axe (X1) perpendiculaire à l'axe optique, et un taux d'étalement de l'image maximal le long d'au moins un second axe (X2) perpendiculaire à l'axe optique, de telle sorte qu'une image délivrée par l'objectif est dilatée selon le second axe (X2).

16. Objectif selon la revendication 15, présentant une fonction de répartition (Fd'[Xi]) qui n'est pas linéaire et qui présente une divergence maximale d'au moins $\pm 10\%$ par rapport à une fonction de répartition linéaire (Fd [Xi]), de telle sorte qu'une image (ID3) délivrée par l'objectif présente au moins une zone sensiblement dilatée (ID13-1) et au moins une zone sensiblement comprimée (ID3-2).

17. Objectif selon l'une des revendications 14 à 16, comprenant une combinaison d'un groupe de lentilles (L1-L6) prévu pour capturer une image panoramique selon un angle de champ déterminé, et dans lequel les moyens optiques anamorphiques comprennent au moins une lentille cylindrique (L7, L8) ayant un axe de révolution perpendiculaire à l'axe optique de l'objectif.

18. Objectif selon l'une des revendications 14 à 17, comprenant des moyens optiques formant apodiseur.

19. Objectif selon la revendication 18, dans lequel les moyens optiques formant apodiseur comprennent au moins une lentille asphérique.

20. Objectif selon l'une des revendications 14 à 19, comprenant au moins un miroir déformant.

21. Objectif selon l'une des revendications 14 à 20, **caractérisé en ce qu'**il est du type adaptateur panoramique et est prévu pour être placé devant un objectif non panoramique d'appareil photographique.

**Claims**

1. Method for capturing a digital panoramic image by means of an image sensor (16) and of a fish-eye objective lens having a constant field angle relative to its optical axis, the image sensor being rectangular in shape, **characterized in that** it comprises the steps consisting of:

   - providing a fish-eye objective lens comprising anamorphose optical means, and
   - projecting onto the image sensor (16), without reducing the field of view, by means of the fish-eye objective lens comprising anamorphose means, a panoramic image (ID1, ID3) distorted by anamorphose, which is not in the shape of a disk and which covers a number of pixels on the image sensor higher than the number of pixels that would be covered by a conventional image disk (4) not distorted by anamorphose.

2. Method according to claim 1, wherein the fish-eye objective lens comprising anamorphose optical means has an image point distribution function (Fd[Xi], Fd'[Xi]) that varies according to axes (Xi) perpendicular to the optical axis (OZ) of the objective lens, and which has a minimum spreading rate of the image along a first axis (X1) perpendicular to the optical axis, and a maximum spreading rate of the image along at least a second axis (X2) perpendicular to the optical axis, such that the image projected onto the image sensor is expanded along the second axis (X2).

3. Method according to claim 2, wherein the first (X1) and the second (X2) axes of the objective lens are perpendicular and the image (ID1) projected by the objective lens onto the image sensor is ellipsoidal in shape.

4. Method according to claim 3, wherein the image sensor (16) is arranged relative to the first and second axes of the objective lens so that the major axis (D2) of the ellipsoidal image (ID1) coincides with an effective length (Ld) of the image sensor.

5. Method according to claim 3, wherein the image sensor (16) is arranged relative to the first and second axes of the objective lens so that the major axis (X2) of the ellipsoidal image coincides with a diagonal of the image sensor.

6. Method according to one of claims 2 to 5, wherein the objective lens comprising anamorphose optical means also has a distribution function (Fd' [Xi]) that is not linear and that has a maximum divergence of at least ±10% compared to a linear distribution function (Fd[Xi]), such that the projected image (ID3) has at least one substantially expanded zone (ID3-1) and at least one substantially compressed zone (ID3-2).

7. Method according to one of claims 1 to 6, wherein the fish-eye objective lens comprising anamorphose optical means comprises a combination of a group of lenses (L1-L6) provided to capture a panoramic image according to a determined field angle, and the anamorphic optical means comprise at least one cylindrical lens (L7, L8) having an axis of revolution perpendicular to the optical axis of the objective lens.

8. Method for displaying on a screen (23) a panoramic image (ID1), **characterized in that** it comprises:

   - a step of capturing an initial panoramic image distorted by means of an image sensor being rectangular in shape and of a fish-eye objective lens comprising anamorphose optical means captured in accordance with the method according to one of claims 1 to 7, and
   - a step of correcting (S3, S3') the anamorphose distortions of the initial image.

9. Method according to claim 8, wherein the correction step (S3) comprises transforming the initial distorted panoramic image into a corrected digital image (ID2) in the shape of a disk, the diameter of the corrected image being chosen so that the corrected image comprises a number of image points higher than the number of pixels of the image sensor covered by the initial image.

10. Method according to claim 9, wherein the initial distorted panoramic image (ID1) is ellipsoidal in shape and the corrected image (ID2) has a diameter (D3) the size in number of pixels of which is at least equal to the size in number of pixels of the major axis (D2) of the initial ellipsoidal image (ID1).

11. Method according to claim 8, comprising a step of projecting onto the initial distorted panoramic image (ID1) image points (E(i,j)) of an image sector (IS) to be presented on the screen (23), allowing the colours of the image points of the image sector to be presented on the screen to be determined, the step of projecting the image points (E(i,j)) of the image sector (IS) onto the initial distorted panoramic image (ID1) being performed by means of a distribution function (Fd) representative of the optical properties of the fish-eye objective lens, such that the step of correcting (S3') the distortions of the initial image is implicit in the projection step.

12. Method according to claim 11, wherein the projection step comprises a first step of projecting the image points (E(i,j)) of the image sector (IS) onto a sphere portion (HS), and a second step of projecting, onto the initial distorted panoramic image (ID1), the image points (P(px,py,pz)) projected onto the sphere portion.

13. Computer program product recorded on a medium (25) and loadable into the memory of a digital computer (22), **characterised in that** it contains program codes executable by the computer, arranged to execute the steps of correction of the display method according to one of claims 8 to 12.

**14.** Fish-eye objective lens having a constant field angle relative to its optical axis and comprising optical means (L1-L8) for projecting the image of a panorama (PM) onto an image sensor (16), **characterised in that** it comprises optical anamorphose means (L7-L8) for projecting, without reducing the field of view, an image (ID1, ID3) distorted by anamorphose that is not in the shape of a disk and which covers a number of pixels on an image sensor higher than the number of pixels that would be covered by a conventional image disk (4) not distorted by anamorphose.

**15.** Objective lens according to claim 14, having an image point distribution function (Fd[Xi], Fd'[Xi]) that varies according to axes (Xi) perpendicular to the optical axis (OZ) of the objective lens, and which has a minimum spreading rate of the image along a first axis (X1) perpendicular to the optical axis, and a maximum spreading rate of the image along at least a second axis (X2) perpendicular to the optical axis, such that an image delivered by the objective lens is expanded along the second axis (X2).

**16.** Objective lens according to claim 15, having a distribution function (Fd'[Xi]) that is not linear and that has a maximum divergence of at least $\pm 10\%$ compared to a linear distribution function (Fd[Xi]), such that an image (ID3) delivered by the objective lens has at least one substantially expanded zone (ID3-1) and at least one substantially compressed zone (ID3-2).

**17.** Objective lens according to one of claims 14 to 16, comprising a combination of a group of lenses (L1-L6) provided to capture a panoramic image according to a determined field angle, and in which the optical anamorphose means comprise at least one cylindrical lens (L7, L8) having an axis of revolution perpendicular to the optical axis of the objective lens.

**18.** Objective lens according to one of claims 14 to 17, comprising optical means forming an apodizer.

**19.** Objective lens according to claim 18, wherein the optical means forming an apodizer comprise at least one aspherical lens.

**20.** Objective lens according to one of claims 14 to 19, comprising at least one distorting mirror.

**21.** Objective lens according to one of claims 14 to 20, **characterised in that** it is of the panoramic adapter type and is provided to be placed in front of a still camera non-panoramic objective lens.

**Patentansprüche**

**1.** Verfahren zum Erfassen eines digitalen Panoramabilds mittels eines Bildsensors (16) und eines Fischaugenobjektivs, das einen konstanten Feldwinkel zu seiner optischen Achse hat, wobei der Bildsensor rechteckig ist, **dadurch gekennzeichnet, dass** es die folgenden Schritte aufweist:

- Vorsehen eines Fischaugenobjektivs, das anamorphotische optische Mittel aufweist und
- Projizieren auf den Bildsensor (16) ohne Verringern des Bildaufnahmefelds, mittels des Fischaugenobjektivs, das anamorphotische optische Mittel aufweist, eines Panoramabilds (ID1, ID3), das durch Anamorphose gedehnt ist, das nicht in Scheibenform ist und auf dem Bildsensor eine Anzahl von Pixeln deckt, die größer ist als die Anzahl von Pixeln, die von einer herkömmlichen Bildscheibe, die nicht durch Anamorphose (4) gedehnt ist, gedeckt wird.

**2.** Verfahren nach Anspruch 1, bei dem das Fischaugenobjektiv, das anamorphotische optische Mittel aufweist, eine Funktion (Fd[Xi], Fd'[Xi]) zum Verteilen von Bildpunkten aufweist, die entlang der Achsen (Xi) senkrecht zu der optischen Achse (OZ) des Objektivs variiert, und einen minimalen Streuungsgrad des Bilds entlang einer ersten Achse (X1) senkrecht zu der optischen Achse, und einen maximalen Streuungsgrad des Bilds entlang mindestens einer zweiten Achse (X2) senkrecht zu der optischen Achse derart aufweist, dass das auf den Bildsensor projizierte Bild entlang der zweiten Achse (X2) gedehnt ist.

**3.** Verfahren nach Anspruch 2, bei dem die erste Achse (X1) und die zweite Achse (X2) des Objektivs im rechten Winkel sind und das von dem Objektiv auf den Bildsensor projizierte Bild (ID1) ellipsoidisch ist.

**4.** Verfahren nach Anspruch 3, bei dem der Bildsensor (16) in Bezug zu der ersten und zweiten Achse des Objektivs derart angeordnet ist, dass die große Achse (D2) des ellipsoidischen Bilds (ID1) mit einer Nutzlänge (Ld) des Bildsensors zusammenfällt.

5. Verfahren nach Anspruch 3, bei dem der Bildsensor (16) in Bezug zu der ersten und der zweiten Achse des Objektivs derart eingerichtet ist, dass die große Achse (X2) des ellipsoidischen Bilds mit einer Diagonale des Bildsensors zusammenfällt.

6. Verfahren nach einem der Ansprüche 2 bis 5, bei dem das Fischaugenobjektiv, das anamorphotische optische Mittel aufweist, ferner eine Verteilungsfunktion (Fd'[Xi]) aufweist, die nicht linear ist und eine maximale Divergenz von mindestens ±10 % in Bezug zu einer linearen Verteilungsfunktion (Fd[Xi]) derart aufweist, dass das projizierte Bild (ID3) mindestens eine im Wesentlichen gedehnte Zone (ID3-1) und die mindestens eine im Wesentlichen komprimierte Zone (ID3-2) aufweist.

7. Verfahren nach einem der Ansprüche 1 bis 6, bei dem das Fischaugenobjektiv, das anamorphotische optische Mittel aufweist, eine Kombination einer Linsengruppe (L1-L6) aufweist, die vorgesehen ist, um ein Panoramabild gemäß einem bestimmten Feldwinkel zu erfassen, und wobei die optischen anamorphotischen Mittel mindestens eine zylindrische Linse (L7, L8) aufweisen, die eine Rotationsachse senkrecht zu der optischen Achse des Objektivs hat.

8. Anzeigeverfahren auf einem Bildschirm (23) eines Panoramabilds (ID1), **dadurch gekennzeichnet, dass** es Folgendes aufweist:

   - einen Schritt des Erfassens eines ursprünglichen Panoramabilds, das mittels eines Bildsensors mit Rechteckform und eines Fischaugenobjektivs, das anamorphotische optische Mittel aufweist, ausgeführt gemäß dem Verfahren nach einem der Ansprüche 1 bis 7, gedehnt ist, und
   - einen Korrekturschritt (S3, S3') der anamorphotischen Verformungen des ursprünglichen Bilds.

9. Verfahren nach Anspruch 8, bei dem der Korrekturschritt (S3) das Umformen des ursprünglichen gedehnten Panoramabilds in ein korrigiertes digitales Bild (ID2) in Scheibenform aufweist, wobei der Durchmesser des korrigierten Bilds derart ausgewählt wird, dass das korrigierte Bild eine Anzahl von Bildpunkten aufweist, die größer ist als die Anzahl der Bildpunkte des Bildsensors, die von dem ursprünglichen Bild gedeckt wird.

10. Verfahren nach Anspruch 9, bei dem das ursprüngliche gedehnte Panoramabild (ID1) ellipsoidische Form hat und das korrigierte Bild (ID2) einen Durchmesser (D3) aufweist, dessen Größe in Pixelanzahl mindestens gleich der Größe in Pixelanzahl der großen Achse (D2) des ursprünglichen ellipsoidischen Bilds (ID1) ist.

11. Verfahren nach Anspruch 8, das einen Schritt des Projizierens von Bildpunkten (E(i, j)) eines Bildsektors (IS), der auf dem Bildschirm (23) abzubilden ist, auf das ursprüngliche gedehnte Panoramabild (ID1) aufweist, das es erlaubt, die Farben der Bildpunkte des auf dem Bildschirm darzustellenden Bildsektors zu bestimmen, wobei der Schritt des Projizierens der Bildpunkte (E(i, j)) des Bildsektors (IS) auf das ursprüngliche gedehnte Panoramabild (ID1) mittels einer Verteilungsfunktion (Fd) ausgeführt wird, die für die optischen Eigenschaften des Fischaugenobjektivs derart repräsentativ ist, dass der Korrekturschritt (S3') der Verformungen des ursprünglichen Bilds in dem Projektionsschritt implizit ist.

12. Verfahren nach Anspruch 11, bei dem der Projektionsschritt einen ersten Schritt des Projizierens der Bildpunkte (E(i, j)) des Bildsektors (IS) auf einen Kugelabschnitt (HS) aufweist, und einen zweiten Schritt des Projizierens der Bildpunkte (P(px, py, pz)), die auf den Kugelabschnitt projiziert werden, auf das ursprüngliche gedehnte Panoramabild (ID1).

13. Computerprogrammprodukt, das auf einem Träger (25) aufgezeichnet ist und in den Speicher eines digitalen Computers (22) geladen werden kann, **dadurch gekennzeichnet, dass** es Programmcodes aufweist, die von dem Computer ausgeführt werden können, die für das Ausführen der Korrekturschritte des Anzeigeverfahrens nach einem der Ansprüche 8 bis 12 eingerichtet sind.

14. Fischaugenobjektiv mit einem Feldwinkel, der zu seiner optischen Achse konstant ist und das optische Mittel (L1-L8) aufweist, um das Bild eines Panoramas (PM) auf einen Bildsensor (16) zu projizieren, **dadurch gekennzeichnet, dass** es anamorphotische optische Mittel (L7-L8) aufweist, um ohne Verringerung des Bildaufnahmefelds ein Bild (ID1, ID3), das durch Anamorphose gedehnt ist, das nicht eine Scheibenform hat und auf einem Bildsensor eine Anzahl von Pixeln deckt, die größer ist als die Anzahl von Pixeln, die von einer herkömmlichen, nicht durch Anamorphose gedehnten Bildscheibe (4) gedeckt würde, zu projizieren.

**15.** Objektiv nach Anspruch 14, das eine Verteilungsfunktion (Fd[Xi], Fd'[Xi]) von Bildpunkten aufweist, die entlang der Achsen (Xi) senkrecht zu der optischen Achse (OZ) des Objektivs variiert und einen minimalen Streuungsgrad des Bilds entlang einer ersten Achse (X1) senkrecht zu der optischen Achse und einen maximalen Streuungsgrad des Bilds entlang mindestens einer zweiten Achse (X2) senkrecht zu der optischen Achse derart aufweist, dass ein von dem Objektiv geliefertes Bild entlang der zweiten Achse (X2) gedehnt ist.

**16.** Objektiv nach Anspruch 15, das eine Verteilungsfunktion (Fd'[Xi]) aufweist, die nicht linear ist und eine maximale Divergenz von mindestens $\pm$10% % in Bezug zu einer linearen Verteilungsfunktion (Fd[Xi]) derart aufweist, dass ein von dem Objektiv geliefertes Bild (ID3) mindestens eine im Wesentlichen gedehnte Zone (ID3-1) und mindestens eine im Wesentlichen komprimierte Zone (ID3-2) aufweist.

**17.** Objektiv nach einem der Ansprüche 14 bis 16, das eine Kombination einer Linsengruppe (L1-L6) aufweist, die vorgesehen ist, um ein Panoramabild gemäß einem bestimmten Feldwinkel zu erfassen, und bei dem die anamorphotischen optischen Mittel mindestens eine zylindrische Linse (L7, L8) aufweisen, die eine Rotationsachse senkrecht zu der optischen Achse des Objektivs hat.

**18.** Objektiv nach einem der Ansprüche 14 bis 17, das optische Mittel aufweist, die einen Apodisierer bilden.

**19.** Objektiv nach Anspruch 18, bei dem die optischen Mittel, die einen Apodisierer bilden, mindestens eine asphärische Linse aufweisen.

**20.** Objektiv nach einem der Ansprüche 14 bis 19, das mindestens einen verformenden Spiegel aufweist.

**21.** Objektiv nach einem der Ansprüche 14 bis 20, **dadurch gekennzeichnet, dass** es des Typs Panoramaadapter ist und vorgesehen ist, um vor ein nicht panoramisches Objektiv eines Fotoapparats platziert zu werden.

**Fig. 1**

**Fig. 2**

**Fig. 3**

**Fig. 4**

**Fig. 5A**

**Fig. 5B**

**Fig. 5C**

**Fig. 6**

**Fig. 7A**

**Fig. 7B**

**FIG. 8**

---

**S1 - Acquisition**

- Capture d'une image panoramique au moyen d'un appareil photographique numérique ou d'une caméra vidéo numérique équipé(e) d'un objectif panoramique selon l'invention
⇒ Obtention d'un ellipsoïde image (D1, D2)

---

**S2 - Transfert du fichier image dans un calculateur**
- Transfert du fichier image de l'ellipsoïde image dans un micro-ordinateur
- Stockage en mémoire de masse (optionnel)

---

**S3 -Correction de l'ellipsoïde image**

- Transfert des points image de l'ellipsoïde image dans un disque image virtuel de rayon D2 comprenant plus de points image qu'un disque image de rayon D1
⇒ Obtention d'un disque image classique

---

**S4 - Numérisation**

- Transfert des points images du disque image dans un système d'axes OXYZ en coordonnées sphériques
⇒ Obtention d'une image panoramique en hémisphère

---

**S5 - Affichage Interactif**
- Détermination des points image d'un secteur d'image à afficher
- Affichage du secteur d'image sur une fenêtre d'affichage
- Détection des actions de l'utilisateur sur un pointeur d'écran ou tout autre moyen de commande,
- Détection des actions de l'utilisateur sur des touches de grossissement d'image,
- Modification du secteur affiché (glissement du secteur d'image affiché à la surface de l'hémisphère et/ou rétrécissement/dilatation du secteur d'image affiché)

**Fig. 9**

**FIG. 10**

---

### S1 - Acquisition

- Capture d'une image panoramique au moyen d'un appareil photographique numérique ou d'une caméra vidéo numérique équipé(e) d'un objectif panoramique selon l'invention

⇒ Obtention d'un ellipsoïde image

---

### S2 - Transfert du fichier image dans un calculateur

- Transfert du fichier image de l'ellipsoïde image dans un micro-ordinateur,
- Stockage en mémoire de masse (optionnel)

---

### S3' - Affichage interactif avec correction implicite des déformations de l'image initiale

A - Détermination de la couleur des points E(i, j) d'un secteur d'image à partir des points P'(pu, pv) de l'ellipsoïde image :

1- Détermination des coordonnées Ex, Ey, Ez dans le repère OXYZ de chaque point E(i, j) du secteur d'image, 2- Détermination des coordonnées px, py, pz de points P(px,py,pz) correspondant aux points E(i, j) projetés sur un hémisphère,

3- Au moyen de la fonction de répartition Fd de l'objectif, détermination des coordonnées, dans le repère O'UV de l'ellipsoïde image, des points P'(pu, pv) correspondants à la projection des points P(px,py,pz) sur l'ellipsoïde image, B - Présentation du secteur d'image dans une fenêtre d'affichage C - Détection des actions de l'utilisateur sur un pointeur d'écran ou tout autre moyen de commande D - Détection des actions de l'utilisateur sur des touches de grossissement E - Modification du secteur d'image affiché (déplacement et/ou rétrécissement/grossissement du secteur d'image)

---

**Fig. 11**

**Fig. 12**

EP 1 421 442 B1

**Fig. 13**

$X_1$

16

$X_2$

dr

$Fd'(X_2)$

pmax

$Fd(X_2)$

drmax

$Fd'(X_i)$

$Fd(X_i)$

**Fig. 14A** drlin

$Fd'(X_1)$

$Fd(X_1)$

α

α1  90°

**Fig. 14B**

$X_1$  $X_i$

16

ID3

$X_2$

ID3-2

ID3-1

33

**Fig. 15A**

$J(\alpha_2)$

$J(\alpha_3)$

$J(90°)$

$J(\alpha_1)$

$G(\Psi_i)$

ID4

**Fig. 15B**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5686957 A